# EUROPEAN PATENT APPLICATION

(11) **EP 4 648 308 A1**
(43) Date of publication of application: **12.11.2025**
(21) Application number: 23922358.9
(22) Date of filing: 30.10.2023
(51) Int. Cl.: H04B 10/079

(54) **DATA PROCESSING METHOD APPLIED TO FAULT LOCATING, AND OPTICAL MODULE**

(30) Priority: 15.02.2023 CN 202310146075
(71) Applicant: Huawei Technologies Co., Ltd., Shenzhen, Guangdong 518129 (CN)
(72) Inventor: SU, Changzheng, Shenzhen, Guangdong 518129 (CN); MAO, Baoping, Shenzhen, Guangdong 518129 (CN); GUO, Baobing, Shenzhen, Guangdong 518129 (CN)
(74) Representative: Pfenning, Meinig & Partner mbB
(86) International application number: PCT/CN2023/127857
(87) International publication number: WO 2024/169242

(57) **Abstract**

Embodiments of this application provide a data processing method applied to fault locating and an optical module. The method is applied to the optical module. The optical module includes a module central processing unit, and a sampling unit and a sampling information storage unit that are coupled to the module central processing unit. The method includes: The module central processing unit obtains sampling parameters from the sampling unit, and stores the sampling parameters into the sampling information storage unit. When receiving an indication from a network device, the module central processing unit feeds back, to the network device, N sampling parameters that have been stored in the sampling information storage unit, and sends the N sampling parameters through a plurality of data blocks. In this way, the sampling parameters are sent in batches, to reduce interactions between modules, reduce communication resources and response duration that are consumed during interaction between the modules, and improve overall efficiency of a fault locating procedure.

## Description

This application claims priority to Chinese Patent Application No. 202310146075.X, filed with the China National Intellectual Property Administration on February 15, 2023 and entitled "DATA PROCESSING METHOD APPLIED TO FAULT LOCATING AND OPTICAL MODULE", which is incorporated herein by reference in its entirety.

### TECHNICAL FIELD

Embodiments of this application relate to the communication field, and in particular, to a data processing method applied to fault locating and an optical module.

### BACKGROUND

An optical path fault is a common fault phenomenon in an optical fiber network, and a fault cause may include but is not limited to: a power fault, a line fault, a module fault, a device fault, or the like. These optical path faults may cause optical path interruption (for example, no light is received by a device) or optical path deterioration (for example, a power of light received by a device is low), affecting network service quality. Therefore, when an optical path fault occurs, how to quickly and accurately identify and demarcate these fault points to reduce mean time to repair (Mean Time To Recovery, MTTR) of a network service is a problem that needs to be urgently resolved currently.

### SUMMARY

Embodiments of this application provide a data processing method applied to fault locating and an optical module, to effectively shorten response duration in a fault locating process, further shorten mean time to repair, and improve overall system performance.

According to a first aspect, an embodiment of this application provides a data processing method applied to fault locating. The method is applied to an optical module. The optical module includes: a module central processing unit, a sampling unit, and a sampling information storage unit. The module central processing unit is separately coupled to the sampling unit and the sampling information storage unit. The method includes: The module central processing unit obtains sampling parameters input by the sampling unit. The sampling parameters are obtained by the sampling unit through sampling based on a received optical signal and are sent to the module central processing unit. Then, the module central processing unit stores the obtained sampling parameters into the sampling information storage unit. When the module central processing unit receives indication information input by a network device central processing unit, the module central processing unit obtains N sampling parameters from the sampling information storage unit, and sends the N sampling parameters to the network device central processing unit. N is an integer greater than 1. In a process of sending the N sampling parameters, the N sampling parameters are grouped into a plurality of data blocks for transmission, so that the network device central processing unit performs fault analysis based on the N sampling parameters. Alternatively, a network device sends the N sampling parameters to a network management device, so that the network management device performs fault analysis based on the N sampling parameters. In this way, in this embodiment of this application, the sampling parameter is buffered in the sampling information storage unit. After an upload instruction is received, the buffered N sampling parameters may be grouped into the plurality of data blocks, and the plurality of data blocks are quickly transmitted to the network device central processing unit, so that the network device central processing unit or the network management device may perform fault locating based on the N sampling parameters. In this way, a quantity of interactions between modules in the uploading process of the sampling parameters is reduced, to reduce duration consumed during interaction between the modules, thereby further reducing overall response duration for fault locating, and improving a mean time to repair indicator. In addition, the reduction in the quantity of interactions between modules can effectively reduce communication overheads of a system.

For example, the sampling parameter collected by the sampling unit may be data in a micro granularity, and the micro granularity may be that a sampling interval is less than 100 milliseconds. For example, the sampling parameter may include a photo-generated current that represents an optical power of an input optical signal. The sampling unit may be specifically configured to collect the sampling parameter in real time with millisecond-level sampling time precision. The millisecond-level sampling time precision indicates that the sampling unit collects at least two pieces of data within 1s. Higher sampling precision of the sampling unit may indicate that more sampled data can be provided for determining fault type information.

For example, the sampling parameter may be a quantized analog parameter or a digital parameter.

For example, the optical signal may be a photo-generated current.

For example, the sampling information storage unit is storage space in a memory of the optical module.

For example, N may be less than or equal to a maximum amount of data that can be stored in the sampling information storage unit.

For example, sizes of the plurality of data blocks are the same.

In this embodiment of this application, the module central processing unit may be a component having a data processing function, for example, a central processing unit (central processing unit, CPU) or a microprocessor (Microcontroller Unit, MCU). The sampling unit may be a sampling circuit including an analog-to-digital converter. The sampling information storage unit may be a specific area of a storage in the optical module. Alternatively, at least one independent storage chip may be disposed in the optical module, and the storage chip is used as the sampling information storage unit.

In a possible implementation, the optical module further includes an alarm information generation unit coupled to the module central processing unit. The indication information is sent by the network device central processing unit after the network device central processing unit identifies alarm information. Correspondingly, before that the module central processing unit sends N sampling parameters in the sampling information storage unit to a network device central processing unit in response to indication information input by the network device central processing unit, the method includes: The module central processing unit receives the alarm information input by the alarm information generation unit. After receiving the alarm information, the module central processing unit continues to obtain P sampling parameters input by the sampling unit, and stores the P sampling parameters into the sampling information storage unit. P is an integer greater than 0 and less than N. In this way, in this embodiment of this application, sampling parameters of a period of time before a fault time point and a period of time after the fault time point are obtained and buffered, to increase an amount of information carried in sampling parameters participating in fault analysis, thereby improving accuracy of a fault analysis result, and accurately locating a fault problem.

For example, the N sampling parameters include some sampling parameters before the fault time point and the P sampling parameters after the fault time point.

In a possible implementation, that the module central processing unit sends N sampling parameters in the sampling information storage unit to a network device central processing unit in response to indication information input by the network device central processing unit includes: The module central processing unit sends, in response to the indication information, the N sampling parameters to the network device central processing unit in a sampling time sequence of the N sampling parameters. The sampling time sequence corresponds to a sequence in which the module central processing unit obtains sampling parameters from the sampling unit. In this way, in this embodiment of this application, the module central processing unit sends the N sampling parameters in the sampling time sequence, so that after obtaining the N sampling parameters sorted in the sampling time sequence, the network device central processing unit may directly perform fault analysis based on the obtained N sampling parameters with no need to resort. This can effectively shorten response duration of the network device central processing unit, and effectively improve overall response duration for fault locating.

In a possible implementation, the optical module further includes a buffer unit, and that the module central processing unit sends, in response to the indication information, the N sampling parameters to the network device central processing unit in a sampling time sequence of the N sampling parameters includes: The module central processing unit receives first indication information input by the network device central processing unit, and obtains M1 sampling parameters from the sampling information storage unit based on the sampling time sequence of the sampling parameters in the sampling information storage unit, where the M1 sampling parameters are a preset transmission length. The module central processing unit stores the M1 sampling parameters into the buffer unit in a sampling time sequence, and indicates the network device central processing unit to read the M1 sampling parameters from the buffer unit. The module central processing unit obtains, in response to second indication information input by the network device central processing unit, M2 sampling parameters from the sampling information storage unit based on the sampling time sequence of the sampling parameters in the sampling information storage unit, where the M2 sampling parameters are the preset transmission length. The module central processing unit stores the M2 sampling parameters into the buffer unit in a sampling time sequence, and indicates the network device central processing unit to read the M2 sampling parameters from the buffer unit. In this way, in this embodiment of this application, through sending by block, an upper limit requirement of a bus on data transmission amount can be met, and transmission efficiency of the sampling parameter can be improved. In addition, a plurality of sampling parameters are sent each time, so that a quantity of interactions between modules is reduced, to reduce response duration consumed during interaction between the modules, thereby improving overall response efficiency of a system.

In a possible implementation, a 1^{st} sampling parameter in the M1 sampling parameters is a sampling parameter with a smallest sampling time point in the sampling information storage. In this way, the module central processing unit may find, based on a sampling time point, a 1^{st} sampling parameter that needs to be sent, to quickly locate the 1^{st} sampling parameter, thereby reducing response duration of the module central processing unit.

In a possible implementation, that the module central processing unit sends N sampling parameters in the sampling information storage unit to a network device central processing unit in response to indication information input by the network device central processing unit includes: The module central processing unit sends, in response to the indication information, the N sampling parameters to the network device central processing unit in a storage sequence of the N sampling parameters in the sampling information storage unit. In this way, in this embodiment of this application, the module central processing unit determines, based on the storage sequence, a sequence of sampling parameters that need to be sent, to reduce processing pressure of the module central processing unit, so that the module central processing unit does not need to search the 1^{st} sampling parameter, thereby further reducing response duration of the module central processing unit.

In a possible implementation, the sampling parameters in the sampling information storage unit are stored in the sampling time sequence. In this way, in the storage manner based on the sampling time sequence, during each time of sending, the module central processing unit can send the sampling parameters in the time sequence only by sending the sampling parameters in the storage sequence, with no need to search a location of each sampling parameter.

In a possible implementation, the N sampling parameters respectively correspond to sampling identifiers, and the sampling identifiers indicate the sampling time sequence of the sampling parameters. In this way, the sampling identifier identifying the sampling time point is set, so that the sampling parameters can be stored in the sampling information storage unit out-of-order. Certainly, the sampling parameters may also be stored in sequence. This is not limited in this application. Optionally, in a case of out-of-order storage, the module central processing unit may quickly find, based on the sampling identifiers, sampling parameters that need to be sent, and sort the sampling parameters. Optionally, the module central processing unit may not sort the sampling parameters, but the network device central processing unit may sort the sampling parameters based on the sampling identifiers, so that the sampling parameters are sorted in the sampling sequence.

In a possible implementation, after that the module central processing unit continues to obtain P sampling parameters input by the sampling unit, and stores the P sampling parameters into the sampling information storage unit, the method further includes: The module central processing unit sets a register to a target bit, where the target bit indicates that the module central processing unit has stored the P sampling parameters into the sampling information storage unit. The indication information is sent to the module central processing unit after the network device central processing unit identifies the alarm information and detects that the register has been set to the target bit. In this way, the module central processing unit and the network device central processing unit may implement instruction interaction through the register. The module central processing unit may set the target bit of the register, so that the network device central processing unit performs a subsequent operation in a timely manner based on a value of the register, thereby ensuring real-time interaction between the modules and avoiding impact on response duration.

In a possible implementation, that the module central processing unit stores the sampling parameters into the sampling information storage unit includes: When the sampling information storage unit is not fully written, the module central processing unit stores the sampling parameter into a vacant location of the sampling information storage unit. When the sampling information storage unit is fully written, the module central processing unit overwrites a sampling parameter earliest stored in the sampling information storage unit with the sampling parameter. In this way, in this embodiment of this application, memory space is reused, to reduce memory occupation, so that limited space can be recycled, to store a sampling parameter in a preset time window for fault analysis.

In a possible implementation, the module central processing unit obtains, based on a preset sampling interval, the sampling parameters input by the sampling unit, where the preset sampling interval is at a millisecond level. The sampling information storage unit is a millisecond-level storage medium, and the sampling information storage unit is located in a memory of the optical module. In this way, in this embodiment of this application, more sampling parameters can be obtained and stored through millisecond-level reading and writing, so that an interval between adjacent sampling parameters is shorter, more sampling parameters are obtained in the preset time window, a larger amount of information is carried in the sampling parameters, and subsequent fault analysis is more accurate.

In a possible implementation, the module central processing unit is coupled to a network device central processing unit in an electronic device through a low-speed communication bus interface. The low-speed communication bus interface is an integrated circuit I2C interface or a serial peripheral interface SPI. In this way, the module central processing unit and the network device processing unit may communicate with each other through the bus interface, thereby ensuring reliability and effectiveness of communication between the modules.

According to a second aspect, an embodiment of this application provides an optical module, including a module central processing unit, a sampling unit, and a sampling information storage unit. The module central processing unit is separately coupled to the sampling unit and the sampling information storage unit. The sampling unit is configured to: perform sampling based on a received optical signal to obtain sampling parameters, and output the sampling parameters to the module central processing unit. The module central processing unit is configured to: receive the sampling parameters, and store the sampling parameters into the sampling information storage unit. The module central processing unit is further configured to send N sampling parameters in the sampling information storage unit to a network device central processing unit in response to indication information input by the network device central processing unit, where the N sampling parameters are grouped into a plurality of data blocks for transmission, so that the network device central processing unit or a network management device performs fault analysis based on the N sampling parameters. The N sampling parameters of the network management device are sent by the network device central processing unit, and N is an integer greater than 1.

In a possible implementation, the optical module further includes an alarm information generation unit coupled to the module central processing unit. The sampling unit is further configured to output the sampling parameter to the alarm information generation unit. The alarm information generation unit is configured to: generate alarm information when the sampling parameter meets a preset alarm condition, and output the alarm information to the module central processing unit and the network device central processing unit, where the indication information is sent by the network device central processing unit after the network device central processing unit identifies the alarm information. The module central processing unit is further configured to: after receiving the alarm information, continue to obtain P sampling parameters input by the sampling unit, and store the P sampling parameters into the sampling information storage unit, where P is an integer greater than 0 and less than N.

In a possible implementation, the module central processing unit is specifically configured to: send, in response to the indication information, the N sampling parameters to the network device central processing unit in a sampling time sequence of the N sampling parameters, where the sampling time sequence corresponds to a sequence in which the module central processing unit obtains sampling parameters from the sampling unit.

In a possible implementation, the optical module further includes a buffer unit, and the module central processing unit is specifically configured to: receive first indication information input by the network device central processing unit, and obtain M1 sampling parameters from the sampling information storage unit based on the sampling time sequence of the sampling parameters in the sampling information storage unit, where the M1 sampling parameters are a preset transmission length; store the M1 sampling parameters into the buffer unit in a sampling time sequence, and indicate the network device central processing unit to read the M1 sampling parameters from the buffer unit; obtain, in response to second indication information input by the network device central processing unit, M2 sampling parameters from the sampling information storage unit based on the sampling time sequence of the sampling parameters in the sampling information storage unit, where the M2 sampling parameters are the preset transmission length; and store the M2 sampling parameters into the buffer unit in a sampling time sequence, and indicate the network device central processing unit to read the M2 sampling parameters from the buffer unit.

In a possible implementation, a 1^{st} sampling parameter in the M1 sampling parameters is a sampling parameter with a smallest sampling time point in the sampling information storage.

In a possible implementation, the module central processing unit is specifically configured to: send, in response to the indication information, the N sampling parameters to the network device central processing unit in a storage sequence of the N sampling parameters in the sampling information storage unit.

In a possible implementation, the sampling parameters in the sampling information storage unit are stored in the sampling time sequence.

In a possible implementation, the N sampling parameters respectively correspond to sampling identifiers, and the sampling identifiers indicate the sampling time sequence of the sampling parameters.

In a possible implementation, the module central processing unit is further configured to set a register to a target bit, where the target bit indicates that the module central processing unit has stored the P sampling parameters into the sampling information storage unit. The indication information is sent to the module central processing unit after the network device central processing unit identifies the alarm information and detects that the register has been set to the target bit.

In a possible implementation, the module central processing unit is specifically configured to: when the sampling information storage unit is not fully written, store the sampling parameter into a vacant location of the sampling information storage unit; or when the sampling information storage unit is fully written, overwrite a sampling parameter earliest stored in the sampling information storage unit with the sampling parameter.

In a possible implementation, the module central processing unit obtains, based on a preset sampling interval, the sampling parameters input by the sampling unit, where the preset sampling interval is at a millisecond level. The sampling information storage unit is a millisecond-level storage medium, and the sampling information storage unit is located in a memory of the optical module.

Any one of the second aspect and the implementations of the second aspect respectively correspond to any one of the first aspect and the implementations of the first aspect. For technical effects corresponding to any one of the second aspect and the implementations of the second aspect, refer to technical effects corresponding to any one of the first aspect and the implementations of the first aspect. Details are not described herein again.

According to a third aspect, an embodiment of this application provides a network device. The network device may include any one of the foregoing optical modules and a network device central processing unit. The network device central processing unit is coupled to the optical module. The network device central processing unit is configured to send indication information to the optical module, to indicate the optical module to feed back a sampling parameter. The optical module is configured to send N sampling parameters in the sampling information storage unit to the network device central processing unit in response to the indication information, where the N sampling parameters are grouped into a plurality of data blocks for transmission. The network device central processing unit is configured to: perform fault analysis based on the N sampling parameters, or send the N sampling parameters to a network management device, so that the network management device performs fault analysis based on the N sampling parameters.

For example, the network device may be an optical transmission device, an optical access device, an optical switching device, an optical amplification device, a router, a switch, a wireless base station, a wireless remote access device, a radio baseband signal processing device, or the like.

For example, the network device is connected to the network management device through a network communication interface, and the network device may exchange information with the network management device through the network communication interface.

According to a fourth aspect, an embodiment of this application provides a communication system. The communication system includes any one of the foregoing network devices and a power supply line. The power supply line is configured to supply power to the network device.

In a possible implementation, the system further includes a network management device. The network management device is configured to: receive N sampling parameters sent by the network device, and perform fault analysis based on the N sampling parameters. The network management device may perform unified management and control on the communication system.

For example, the network device is connected to the network management device through a network communication interface, and the network device may exchange information with the network management device through the network communication interface.

### BRIEF DESCRIPTION OF DRAWINGS

FIG. 1 is one of schematic diagrams of an example of a structure a communication system;
FIG. 2 is one of schematic diagrams of an example of a structure a communication system;
FIG. 3 is one of schematic diagrams of an example of a structure a communication system;
FIG. 4 is a schematic diagram of an example of a structure an optical-to-electrical conversion module;
FIG. 5 is a schematic diagram of an example of a structure an optical amplification module;
FIG. 6 is a schematic diagram of an example of a structure an optical switching module;
FIG. 7 is one of schematic diagrams of an example of a structure a network device;
FIG. 8 is one of schematic diagrams of an example of a structure a network device;
FIG. 9 is one of schematic diagrams of an example of a structure a communication system;
FIG. 10 is a schematic flowchart of an example of a data processing method applied to fault locating;
FIG. 11a is a schematic diagram of an example of storage of sampling parameters;
FIG. 11b is a schematic diagram of an example of storage of sampling parameters;
FIG. 12 is a schematic diagram of an example of a sampling parameter;
FIG. 13 is a schematic diagram of an example of storage of sampling parameters;
FIG. 14 is a schematic diagram of an example of data transmission;
FIG. 15 is a schematic diagram of an example of data transmission;
FIG. 16 is a schematic diagram of an example of sorting sampling parameters; and
FIG. 17 is a schematic diagram of an example of a structure of an apparatus.

### DESCRIPTION OF EMBODIMENTS

The following clearly and completely describes the technical solutions in embodiments of this application with reference to the accompanying drawings in embodiments of this application.

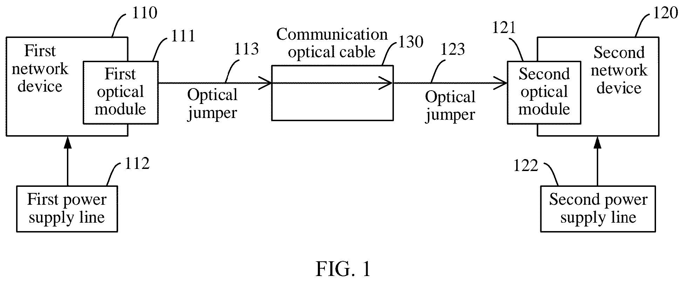

FIG. 1 is a schematic diagram of an example of a structure a communication system. Refer to FIG. 1. A communication system in an embodiment of this application includes but is not limited to an electronic device (referred to as a network device in this embodiment of this application) and a power supply line. For example, the network device includes but is not limited to a first network device 110 and a second network device 120. The first network device 110 includes but is not limited to a first optical module 111. The second network device 120 includes but is not limited to a second optical module 121. The power supply line includes but is not limited to: a first power supply line 151 and a second power supply line 152. The first network device 110 exchanges data with the second network device 120 through an optical jumper (for example, including an optical jumper 113 and an optical jumper 123) and a communication optical cable 130. Data exchange may also be understood as optical signal exchange.

For example, an optical signal transmission path in the communication system shown in FIG. 1 may be: the first optical module 111 in the first network device 110 outputs an optical signal, the optical signal is input to the communication optical cable 130 through the first optical jumper 113, and the optical signal output by the communication optical cable 130 is input to the second optical module 121 of the second network device 120 of the second network device through the second optical jumper 123. Therefore, optical signal transmission between the first optical module 111 and the second optical module 121 is implemented.

For example, the first power supply line 112 is connected to the first network device 110, and the first power supply line 112 is configured to supply power to the first network device 110. The second power supply line 122 is connected to the second network device 120, and the second power supply line 122 is configured to supply power to the second network device 120.

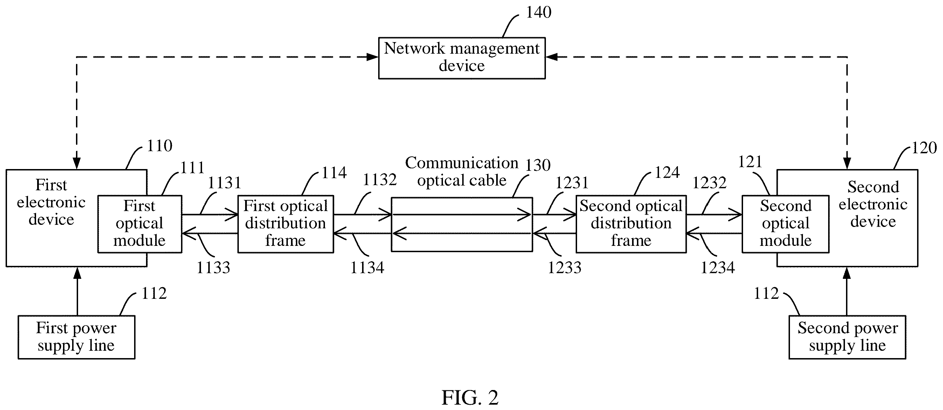

FIG. 2 is a schematic diagram of an example of a structure of another communication system. Refer to FIG. 2. Compared with the communication system shown in FIG. 1, the communication system shown in FIG. 2 further includes but is not limited to a network management device 140, a first optical distribution frame (optical distribution frame, ODF) 114, a second optical distribution frame 124, and a bidirectional optical jumper.

For example, the network management device 140 is configured to provide a management service for the communication system.

For example, the first optical distribution frame 114 is located between the first optical module 111 and the communication optical cable 130. The second optical distribution frame 124 is located between the second optical module 121 and the communication optical cable 130.

In the communication system, an optical jumper between the first network device 110 and the second network device 120 is the bidirectional optical jumper, so that optical signal bidirectional transmission between the first network device 110 and the second network device 120 can be implemented. In other words, the first network device 110 may send an optical signal to the second network device 120, and the second network device 120 may also send an optical signal to the first network device 110.

Still refer to FIG. 2. In an example, an optical signal transmission path in the communication system may be: an optical signal output by the first optical module 111 is input to the communication optical cable 130 through the optical jumper 1131, the first optical distribution frame 114, and the optical jumper 1132, and the optical signal output by the communication optical cable 130 is input to the second optical module 121 through the optical jumper 1231, the second optical distribution frame 124, and the optical jumper 1232.

In another example, an optical signal transmission path in the communication system may be: an optical signal output by the second optical module 121 is input to the communication optical cable 130 through the optical jumper 1234, the second optical distribution frame 124, and the optical jumper 1233, and the optical signal output by the communication optical cable 130 is input to the first optical module 111 through the optical jumper 1134, the first optical distribution frame 114, and the optical jumper 1133. Therefore, optical signal bidirectional transmission between the first optical module 121 and the second optical module 122 is implemented.

It should be noted that quantities of modules, electronic devices (including the network device and the network management device), optical jumpers, and the like in the communication system in this embodiment of this application are merely examples. Actually, more modules, electronic devices, or optical jumpers may be included, and connection relationships between components in the communication system may be set based on different structures. This is not limited in this application.

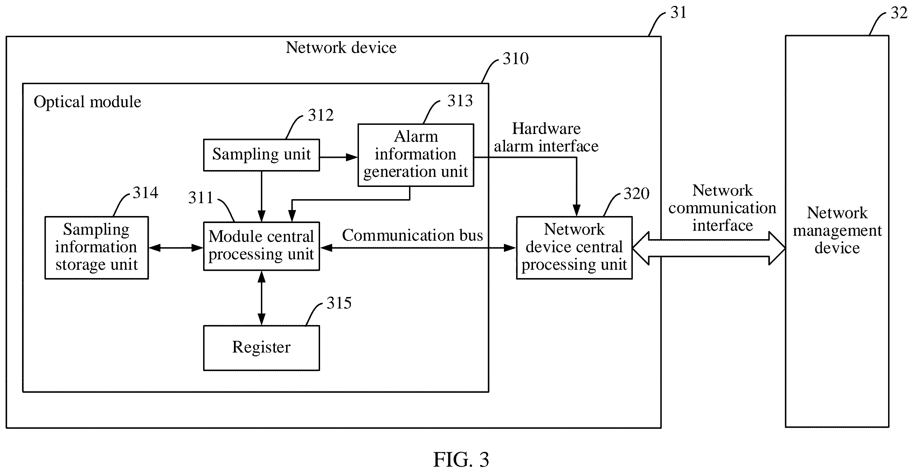

FIG. 3 is a schematic diagram of an example of a structure a communication system. Refer to FIG. 3. A network device 31 includes but is not limited to a network device central processing unit 320 and an optical module 310. The optical module 310 includes but is not limited to: a module central processing unit 311, a sampling unit 312, an alarm information generation unit 313, a sampling information storage unit 314, and a register 315.

The module central processing unit 311 is separately coupled to the sampling unit 312, the alarm information generation unit 313, the sampling information storage unit 314, and the register 315.

The sampling unit 312 is configured to receive an optical signal, perform millisecond-level sampling and quantization on the optical signal, generate real-time parameter sampled data (referred to as a sampling parameter in this embodiment of this application), and separately output the collected sampling parameter to the module central processing unit 311 and the alarm information generation unit 313. The sampling parameter is a photo-generated current that represents an optical power of the input optical signal. For example, a sampling interval of the sampling unit 312 may be preconfigured, for example, may be 2 ms, and may be set based on an actual requirement. This is not limited in this application.

For example, the sampling unit 312 may be specifically configured to collect the sampling parameter in real time with millisecond-level sampling time precision. The millisecond-level sampling time precision indicates that the sampling unit collects at least two pieces of data within 1s. Higher sampling precision of the sampling unit indicates that the sampling parameter can more reflect a status change of the optical signal and that more sampled data can be provided for fault analysis.

In a possible implementation, the sampling unit 312 may be a sampling circuit including an analog-to-digital converter. In an example, the sampling unit 312 may convert the sampling parameter, and two paths of output sampling parameters are digital parameters or quantized analog parameters. In other words, the sampling parameters received by the alarm information generation unit 313 and the module central processing unit are both quantized analog parameters or digital parameters. In another example, the sampling unit 312 may convert one path of sampling parameter, where an output sampling parameter is a digital parameter or quantized analog parameter, and output the path of sampling parameter to the module central processing unit 311. A sampling parameter output by the sampling unit 312 to the alarm information generation unit 313 is optionally an analog parameter.

The alarm information generation unit 313 is configured to: receive the sampling parameter of the sampling unit 312, and perform exception identification based on the obtained sampling parameter, to determine whether a preset alarm event occurs. For example, the alarm information generation unit sets an alarm information generation condition (which may also be referred to as an exception determining condition or the like). The condition is used to indicate whether an alarm event occurs. Optionally, the alarm information generation condition may be a preset threshold range. When the sampling parameter exceeds the preset threshold range, for example, is greater than a maximum value of the preset threshold range, or is less than a minimum value of the preset threshold range, it is determined that an exception occurs, or it may be understood that the alarm event occurs.

When determining that the preset alarm event occurs, the alarm information generation unit 313 is further configured to generate alarm information, and output the alarm information to the module central processing unit 311. Optionally, the alarm information may be further output to the network device central processing unit 320. For example, the alarm information may be loss of signal (loss of signal, LOS).

For example, the alarm information generation unit 313 may communicate with the network device central processing unit 320 through a hardware alarm interface or a communication bus. Optionally, the alarm information generation unit 313 quickly transmits the alarm information to the module central processing unit 311 and the network device central processing unit 320 through a level jump of a hardware pin interface.

For example, the alarm information may be that a digital logic signal changes from a low level to a high level, or the alarm information may be that a digital logic signal changes from a high level to a low level. Certainly, the alarm information may also be information of another type. This is not limited herein.

The module central processing unit 311 is configured to receive the sampling parameters input by the sampling unit 312 and the alarm information input by the alarm information generation unit 312. For example, the module central processing unit 311 stores the obtained sampling parameter into the sampling information storage unit 314. When the module central processing unit 311 receives the alarm information input by the alarm information generation unit 312, the module central processing unit 311 continues to obtain P sampling parameters from the sampling unit 312, and stores the P sampling parameters into the sampling information storage unit 314. The module central processing unit 311 is further configured to: in response to an indication of the network device central processing unit 320, obtain N sampling parameters from the sampling information storage unit 314, and send the N sampling parameters to the network device central processing unit 320 through a plurality of data blocks (which may also be referred to as file blocks).

For example, the module central processing unit 311 may be a component having a data processing function, for example, a central processing unit (central processing unit, CPU) or a microprocessor (Microcontroller Unit, MCU).

The sampling information storage unit 314 is configured to store the sampling parameter. In this embodiment of this application, the sampling information storage unit is a millisecond-level storage, that is, data writing and reading in the storage unit are both at millisecond levels. Correspondingly, when the module central processing unit performs data writing and reading on the sampling information storage unit, millisecond-level writing and reading can be implemented, thereby effectively shortening duration occupied by data writing and reading. Further, data reading duration is shortened, so that overall response duration in a fault analysis phase can be effectively reduced.

For example, the sampling information storage unit 314 may be specified space in the memory. The memory may be a random access memory (Random Access Memory, RAM), a flash memory, or the like. This is not limited in this application.

The network device central processing unit 320 is configured to receive the alarm information input by the alarm information generation unit 313. After receiving the alarm information, the network device central processing unit 320 may indicate the module central processing unit 311 to feed back the sampling parameter. This may also be understood as triggering the module central processing unit to send the sampling parameters in batches to the network device central processing unit 320 through a plurality of data blocks.

Optionally, the network device central processing unit 320 may further set a preset fault data uploading condition. When it is detected that the preset fault data uploading condition is met, the module central processing unit 311 is triggered to feed back the sampling parameter.

The network device central processing unit 320 is further configured to perform fault analysis based on the obtained sampling parameter, to obtain a fault analysis result. Optionally, the network device central processing unit may send the obtained sampling parameter to the network management device 32 through a network communication interface, and the network management device 32 may perform fault analysis based on the obtained sampling parameter, and obtain a fault analysis result.

The register 315 is configured to store factory information, configuration information, second-level real-time parameter information, and the like that are related to the module. The following describes some registers in this embodiment of this application.

**Table 1**

| Number | Register name | Maximum length (unit: byte) |
|---|---|---|
| 1 | TotalSampleNum (total quantity of sampling points) | 2 |
| 2 | SampleModeControl (sampling mode control) | 1 |
| 3 | SampleDurations (Sampling time interval) | 2 |
| 4 | SampleReadyFlag (sampled data ready flag) | 1 |
| 5 | Post-SampleNum (quantity of supplementary collection points after an alarm is generated) | 2 |
| 6 | DumpID (file identifier) | 2 |
| 7 | DumpLength (file length) | 4 |
| 8 | UploadControl (upload control) | 1 |
| 9 | UploadStatus (upload status) | 1 |
| 10 | DumpBufferLength (file block buffer length) | 1 |

The following describes functions of the registers in this embodiment of this application with reference to Table 1.
1. The TotalSampleNum register is configured to indicate a maximum quantity of collection points. Statuses are as follows.
   0: indicates that fast collection is not supported, and indicates that the fault analysis solution in this embodiment of this application is not supported. For example, on some devices, due to a hardware limitation, the module may not support program running in this embodiment of this application. In a possible implementation, a configuration register may be set to indicate whether the solution in this embodiment of this application is supported.
   1 to 65535: total quantity of collection points, indicate a quantity of sampling points that can be stored by the module central processing unit 311 into the sampling information storage unit 314.

It should be noted that, in this embodiment of this application, a length corresponding to each sampling point (that is, a sampling parameter) may be 2 bytes, and may be set based on an actual requirement. This is not limited in this application. Correspondingly, in this embodiment of this application, related information may be preconfigured based on the quantity of sampling points and/or a corresponding data length.
2. The SampleModeControl register is configured to indicate a start/stop configuration of the module central processing unit 311. The register includes two modes.
   a. A collection start/stop mode corresponds to Bit0. Statuses are as follows.
      0: force (passive) mode, indicates that after receiving alarm information, the module central processing unit 311 has collected P pieces of data indicated by the Post-SampleNum register, and sets the SampleReadyFlag flag. Each time the force mode is configured on the device, the module is triggered to perform passive collection once.
      1: auto mode, indicates that after receiving the alarm information, the module central processing unit 311 stops obtain a sampling parameter. After the alarm information is canceled, the module central processing unit 311 obtains the sampling parameter again.
   b. A collected data reset (reset) mode corresponds to Bit1. Statuses are as follows.
      0: not start reset, indicates that when 0 is set, the module central processing unit 311 does not need to perform reset operations such as data clearing. This state is default, that is, the register is set to this bit during initialization.
      1: start reset, indicates to trigger the module central processing unit 311 to self-clear data, and set the SampleReadyFlag register to 0. After the module central processing unit 311 is triggered to self-clear the data, a bit of the register is automatically set to 0. For example, the data self-clearing includes but is not limited to: clearing data in the sampling information storage unit 314, to prevent residual data from affecting a subsequently written sampling parameter, and further from affecting a next fault analysis result.
3. The SampleDurations register is configured to indicate the module central processing unit 311 to obtain a sampling interval of the sampling parameter from the sampling unit. This may also be understood as that the module central processing unit 311 writes the sampling interval of the sampling parameter into the sampling information storage unit 314. The sampling interval of the sampling parameter is a time interval from sampling to data storage to internal cache between two continuous times of sampling. Statuses of the register range from 1 to 65536. A unit is 100 µs.
4. The SampleReadyFlag register is configured to indicate whether the sampling parameter is ready. That the sampling parameter is ready herein means that the sampling parameter stored in the sampling information storage unit 314 is fault data required by the network device side. Statuses are as follows.
   0: The data is ready.
   1: The data is being prepared. This state is default, that is, the register is set to this bit during initialization.
5. The Post-SampleNum register is configured to indicate a quantity of sampling parameters that the module central processing unit 311 continues to obtain after receiving the alarm information, for example, P. Statuses are as follows.
   0 to 65535: are used to supplement the quantity of sampling points. For example, when the Post-SampleNum register is set to 10, after receiving the alarm information, the module central processing unit 311 continues to obtain 10 sampling parameters. A specific value may be set based on an actual requirement. This is not limited in this application.
6. The DumpID register is configured to indicate an uploaded Dump file type (which may also be understood as a data type). Statuses are as follows.
   0: indicates that the value is default. That is, the DumpID register is set to 0 in the initialization phase described below.
   Others: indicate corresponding file types, such as, a log type and a sampling parameter type.
7. The DumpLength register is configured to indicate a total quantity of sampling parameters transmitted by the module central processing unit 311 to the network device central processing unit 320. For example, as described above, the number and the length of sampling parameters correspond. For example, a length of each sampling parameter is 2 bytes. If the DumpLength register indicates that a total length of uploaded data is 1024 bytes, a corresponding quantity of sampling parameters is 512. Correspondingly, the DumpLength register may indicate a total quantity of sampling parameters that need to be uploaded, or may indicate a total length of the sampling parameters that need to be uploaded. This is not limited in this application. In this embodiment of this application, an example in which the total length of the sampling parameters is indicated is used for description.
8. The UploadControl register is configured to trigger the module central processing unit 311 to transmit the sampling parameter to the network device central processing unit 320. Statuses are as follows.
   0x01: Start to upload the sampling parameter.
   0x02: Continue to upload a remaining sampling parameter.
   0x03: Stop uploading the sampling parameter.
   Other values: reserved.

It should be noted that "uploading" in this embodiment of this application is an abbreviation for transmitting the sampling parameter by the module central processing unit 311 to the network device central processing unit 320.
9. The UploadStatus register is configured to indicate uploading statuses of the sampling parameter of the module central processing unit 311. The statuses are as follows.
   b0: The file block is ready. 1: identifies that the file block is ready. 0: identifies that the file block is not ready.
   b1: The file has been uploaded. 1: identifies that the file has been uploaded. 0: identifies that the file has not been uploaded. In this embodiment of this application, that the file has been uploaded means that all sampling parameters corresponding to a total data length declared by the DumpLength register have been uploaded. For example, "uploading" in this embodiment of this application means that the module central processing unit 311 sends data to the network device central processing unit 320, or may be further understood as that the module central processing unit 311 writes data required by the network device central processing unit 320 into a buffer area (a concept is described below). In some possible implementations, if the number (or the length) of sampling parameters currently stored in the sampling information storage unit is less than the total data length declared by the DumpLength register, the module central processing unit 311 may set bit1 of the UploadStatus register to 1 after sending all sampling parameters in the sampling information storage unit to the network device central processing unit 320, to indicate that the file has been uploaded.
   b2-7: Reserved.
10. The DumpBufferLength register is configured to indicate a length of each file block (which may also be referred to as a data block) sent by the module central processing unit 311 to the network device central processing unit 320 (or may indicate a quantity of sampling points, that is, the quantity of sampling parameters, which is not limited in this application).

A specific use manner of each register is described in detail below.

For example, the sampling unit 312 may be a sampling circuit including an analog-to-digital converter. The sampling information storage unit 314 and the register 315 may be specific areas of a storage in the optical module 310. Alternatively, at least one independent storage chip may be disposed in the optical module 310, and the storage chip is used as the sampling information storage unit 314 and/or the register 315. In other words, the sampling information storage unit 314 and the register 315 may separately use one storage chip, or may share a same storage chip. This is not limited in this application.

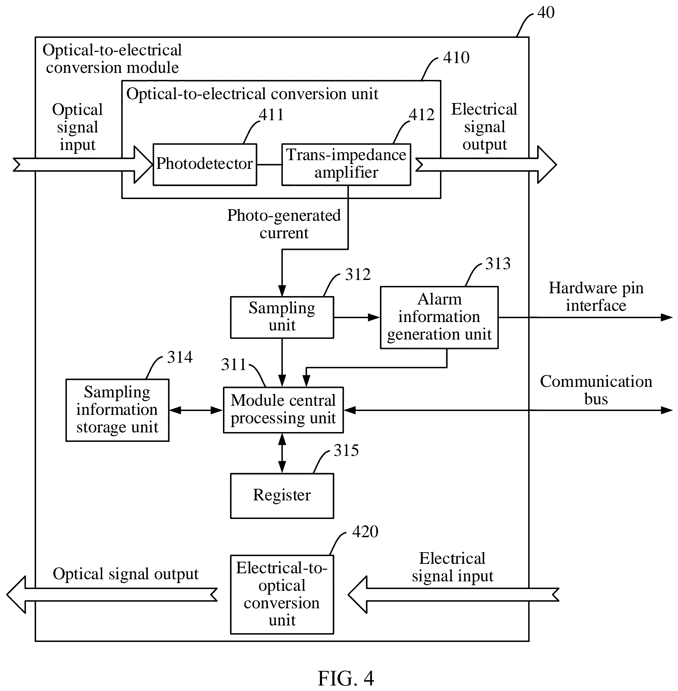

In a possible implementation, the optical module in this embodiment of this application may be an optical-to-electrical conversion module. FIG. 4 is a schematic diagram of a structure of the optical-to-electrical conversion module in this embodiment of this application. As shown in FIG. 4, an optical-to-electrical conversion module 40 includes but is not limited to a module central processing unit 311, a sampling unit 312, an alarm information generation unit 313, a sampling information storage unit 314, a register 315, an optical-to-electrical conversion unit 410, and an electrical-to-optical conversion unit 420. The optical-to-electrical conversion unit 410 is configured to convert an input optical signal into an electrical signal, and output the electrical signal obtained through conversion to a network device. The electrical-to-optical conversion unit 420 is configured to convert an electrical signal output by a network device into an optical signal. The optical-to-electrical conversion unit 410 may include a photodetector 411 and a trans-impedance amplifier 412. The photodetector 411 is configured to convert an input optical signal into a photo-generated current signal that carries information, and input the photo-generated current signal to the trans-impedance amplifier 412. The trans-impedance amplifier 412 is configured to convert a photo-generated current signal into a voltage signal and amplify the voltage signal.

In this embodiment of this application, a direct current component of the photo-generated current signal may be defined as a photo-generated current. The photo-generated current is in a linear relationship with a magnitude of an optical power of the input optical signal. A larger photo-generated current indicates a larger optical power of the input optical signal, and a smaller photo-generated current indicates a smaller optical power of the input optical signal. Therefore, the photo-generated current may be used to represent the magnitude of the optical power. The sampling unit 312 may collect a photo-generated current output by the optical-to-electrical conversion unit 410, and may use the photo-generated current as the foregoing sampling parameter. Functions of detecting the photo-generated current and transmitting the photo-generated current to the sampling unit 312 may be integrated into the photodetector 411, or may be integrated into the trans-impedance amplifier 412. In FIG. 3, an example in which the functions are integrated into the trans-impedance amplifier 412 is used for illustration.

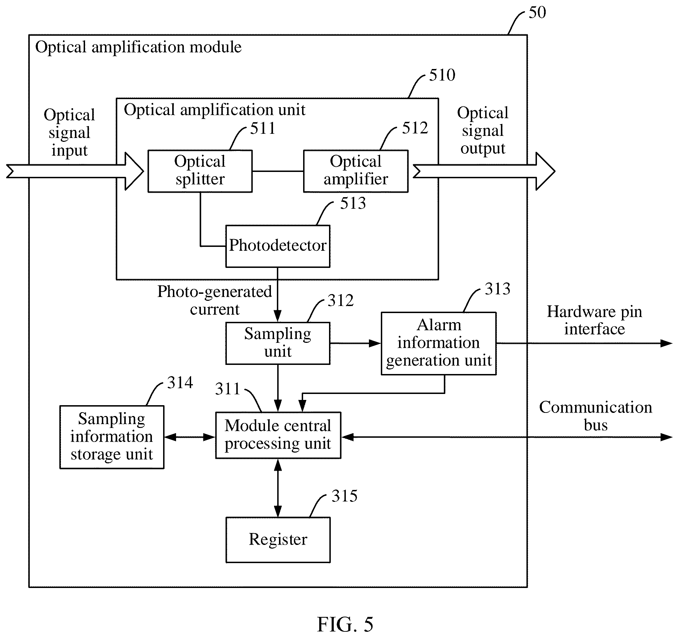

In another possible implementation, the optical module in this embodiment of this application may be an optical amplification module. FIG. 5 is a schematic diagram of a structure of the optical amplification module in this embodiment of this application. As shown in FIG. 5, an optical amplification module 50 includes but is not limited to a module central processing unit 311, a sampling unit 312, an alarm information generation unit 313, a sampling information storage unit 314, a register 315, and an optical amplification unit 510. The optical amplification unit 510 is configured to amplify an input optical signal to output an optical signal with a higher optical power. The optical amplification unit 510 may include: an optical splitter 511, a photodetector 512, and an optical amplifier 513. For example, the optical splitter 511 is configured to divide an input optical signal into two parts. One part is input to the optical amplifier 512, and the other part is input to the photodetector 513. The optical amplifier 512 is configured to amplify an input optical signal for outputting. The photodetector 513 is configured to convert an input optical signal into a photo-generated current signal. Because the optical amplification module 50 does not need to process an electrical signal included in the optical signal, the photodetector 513 detects only a direct current component (that is, a photo-generated current) of the photo-generated current signal. The photodetector 513 is further configured to transmit the photo-generated current to the sampling unit 312. The sampling unit 312 may collect the photo-generated current output by the photodetector 513, and may use the photo-generated current as the foregoing sampling parameter.

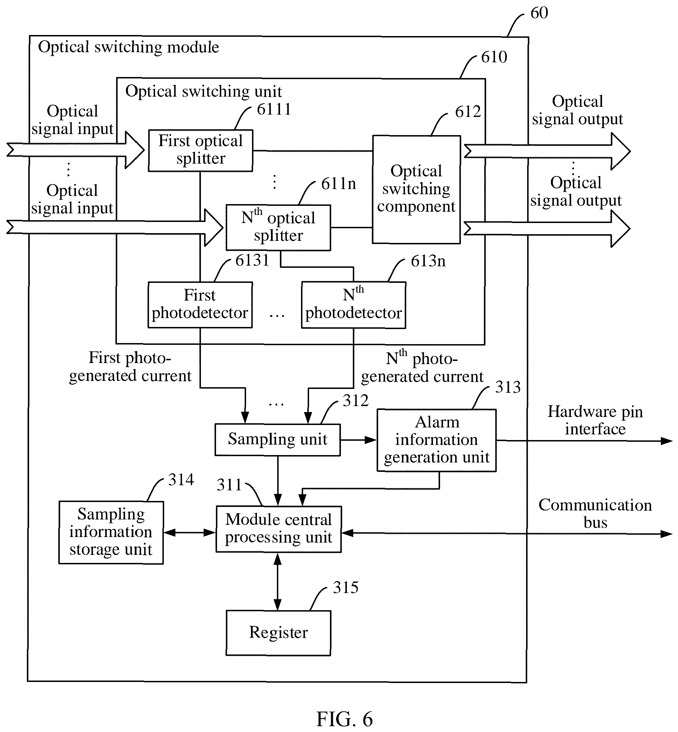

In another possible implementation, the optical module in this embodiment of this application may be an optical switching module. FIG. 6 is a schematic diagram of a structure of the optical switching module in this embodiment of this application. As shown in FIG. 6, an optical switching module 60 includes but is not limited to a module central processing unit 311, a sampling unit 312, an alarm information generation unit 313, a sampling information storage unit 314, a register 315, and an optical switching unit 610. The optical switching unit 610 is configured to perform channel or wavelength switching on optical signals input through a plurality of ports, and output switched optical signals to different output ports. An input optical signal or an output optical signal of each port may include an optical signal of one or more wavelengths. The optical switching unit 610 may include but is not limited to a plurality of optical splitters (for example, a first optical splitter 6111, ..., and an N^{th} optical splitter 611n in FIG. 6), a plurality of photodetectors (for example, a first photodetector 6131, ..., and an N^{th} photodetector 613n in FIG. 6) and an optical switching component 612. The optical splitter is configured to divide an input optical signal into two parts. One part is input to the optical switching component 612, and the other part is input to a corresponding photodetector. The optical switching component 612 is configured to perform channel or wavelength switching on an input optical signal for outputting. The photodetector is configured to convert an input optical signal into a photo-generated current signal. Because the optical switching module 60 does not need to process an electrical signal included in the optical signal, the photodetector detects only a direct current component (that is, a photo-generated current) of the photo-generated current signal. The photodetector is further configured to transmit the photo-generated current to the sampling unit 312. The sampling unit 312 may collect the photo-generated current output by the photodetector, and may use the photo-generated current as the foregoing sampling parameter.

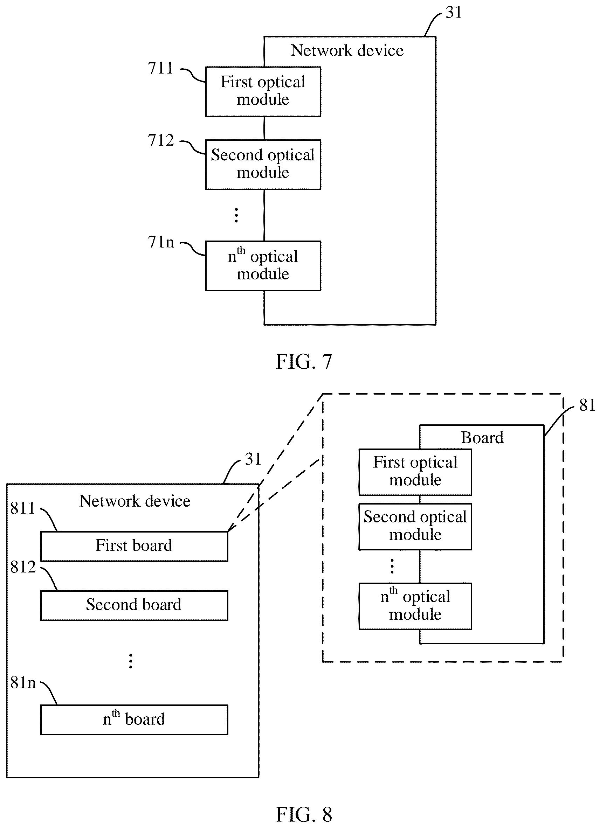

FIG. 7 is a schematic diagram of a structure of a network device according to an embodiment of this application. Refer to FIG. 7. In some embodiments of this application, a network device 70 may include at least one optical module. For example, the network device 31 may include a first optical module 711, a second optical module 712, ..., and an n^{th} optical module 71n. In an example, the network device 31 may be an integrated device, and the optical module may be directly inserted into the network device 31 as a pluggable independent module, or the optical module may be disposed inside the network device 31. The network device central processing unit 320 may be connected to the alarm information generation unit 313 in the optical module 310 through a hardware pin interface. The alarm information generation unit 313 is configured to: when alarm information is generated, send the alarm information to the network device central processing unit 320 through a level jump of the hardware pin interface. A level of the hardware pin interface may be changed from a high level to a low level, or may be changed from a low level to a high level. For example, the alarm information may be loss of signal (loss of signal, LOS), and the alarm information may be transmitted through a corresponding hardware pin interface. Through the level jump of the hardware pin interface, the alarm information generation unit 313 can quickly transmit the alarm information to the network device central processing unit 320.

FIG. 8 is a schematic diagram of another structure of a network device according to an embodiment of this application. Refer to FIG. 8. In some other embodiments of this application, the network device 31 may include at least one board. For example, the network device 31 may include a first board 811, a second board 812, ..., and an n^{th} board 81n that are independent of each other. The board 81 may be pluggably inserted into the network device 31, or the board 81 may be disposed inside the network device 31. At least one optical module may be disposed in the board, and the optical module may be pluggably inserted into the board, or the optical module may be disposed inside the board. For example, in FIG. 8, a first optical module, a second optical module, ..., and an n^{th} optical module may be pluggably inserted into the board.

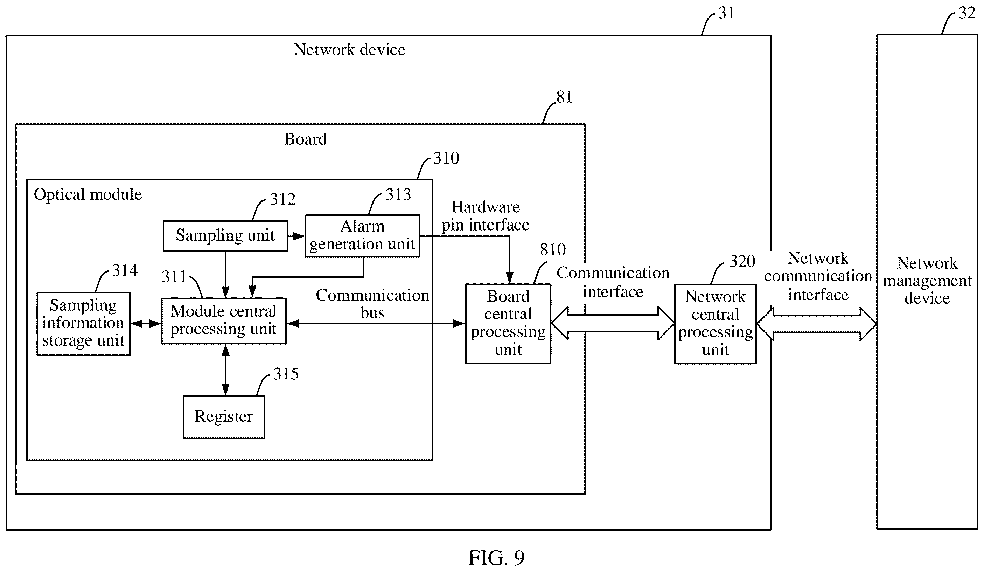

With reference to FIG. 8, FIG. 9 is a schematic diagram of another structure of a communication system according to an embodiment of this application. Refer to FIG. 9. The optical module 310 may exchange information with the network device 31 through the board 81. The board 81 may include but is not limited to a board central processing unit 810. The board central processing unit 810 is connected to the alarm information generation unit 313 in the optical module 310 through a hardware pin interface. The alarm information generation unit 313 is configured to: when alarm information is generated, send the alarm information to the board central processing unit 810 through a level jump of the hardware pin interface. A level of the hardware pin interface may change from a high level to a low level, or may change from a low level to a high level. For example, the alarm information may be loss of signal (loss of signal, LOS), and the alarm information may be transmitted through a corresponding hardware pin interface. Through the level jump of the hardware pin interface, the alarm information generation unit 313 can quickly transmit the alarm information to the board central processing unit 810. In addition, the board central processing unit 810 may send the alarm information to the network processing unit 320 through a communication interface. The board processing unit 810 may be a component having a data processing function, for example, a central processing unit (central processing unit, CPU) or a microprocessor (Microcontroller Unit, MCU).

Still refer to FIG. 9. For example, the board central processing unit 810 may be connected to the network device central processing unit 320 through a communication bus, and the board central processing unit 810 is connected to the module central processing unit 311 through the communication interface. For example, the module central processing unit 311 may output sampling information to the board central processing unit 810, and the board central processing unit 810 outputs the sampling information to the network device central processing unit 320. Certainly, an instruction sent by the network device central processing unit 320 to the module central processing unit 311 may also be forwarded by the board central processing unit 810. In other words, the network device central processing unit 320 and the module central processing unit 311 may exchange data through a board (specifically, the board central processing unit 810). This is not exemplified one by one herein.

In this embodiment of this application, the communication bus may be a serial peripheral device interface (Serial Peripheral Interface, SPI) bus or an inter-integrated circuit serial (Inter-Integrated Circuit, I2C) communication bus. The I2C interface is a bidirectional synchronous serial bus, including a serial data line (serial data line, SDA) and a serial clock line (derail clock line, SCL). It may be understood that the interface connection relationship between the modules shown in this embodiment of this application is merely an example, and does not constitute a limitation on the structure of the network device. In some other embodiments of this application, the network device may alternatively use an interface connection manner different from that in the foregoing embodiment, or use a combination of a plurality of interface connection manners.

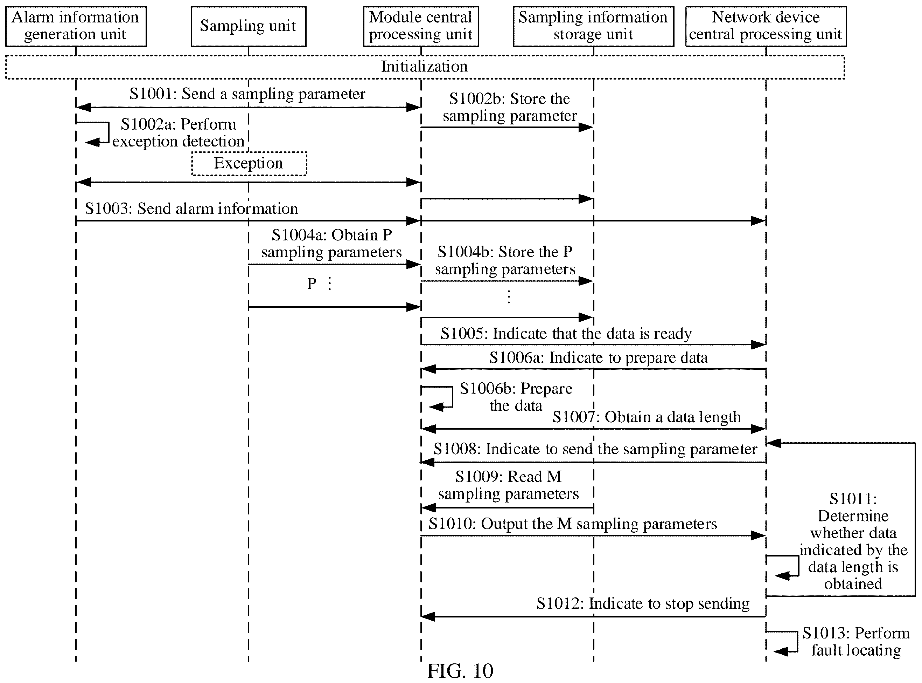

With reference to the foregoing structures of schematic diagrams, FIG. 10 is a schematic flowchart of an example of a data processing method applied to fault locating. Refer to FIG. 10. The method specifically includes but is not limited to the following steps.

For example, before the method is performed, initialization is performed on the modules, to complete configurations of the modules. For example, initialization of the module central processing unit may include but is not limited to: reading the TotalSampleNum register to determine a maximum value L of a quantity of sampling parameters stored in the sampling information storage unit; and reading the SampleDurations register to determine to obtain a sampling interval of the sampling parameter from the sampling unit, and the like.

For example, in an initialization phase (that is, in a case in which a link is normally enabled and no alarm is generated), the module central processing unit reads the SampleModeControl register to set a start/stop mode. For related descriptions of the start/stop mode, refer to related function descriptions of the SampleModeControl register. Details are not described herein again.

In other words, an initialization process of the module central processing unit may be understood as reading a value of a specified register to obtain preset configuration information. The configuration information includes but is not limited to: the maximum value L of the quantity of sampling parameters, the sampling interval, a quantity of supplementary collection points after an alarm is generated, a file block length, and a total file length. It may be understood that some configurations or values involved in the following embodiment are obtained by the module central processing unit by reading a related register in the initialization phase, and are not described in the following again.

S1001: A sampling unit separately sends a sampling parameter to a module central processing unit and an alarm information generation unit.

For example, the sampling unit receives a photo-generated current, performs millisecond-level sampling on the photo-generated current, generates real-time parameter sampled data (referred to as a sampling parameter in this embodiment of this application), and separately outputs the collected sampling parameter to the module central processing unit and the alarm information generation unit.

For example, the sampling parameter may be a quantized analog parameter or a digital parameter. This is not limited in this application.

For example, the sampling unit may be specifically configured to collect the sampling parameter in real time with millisecond-level sampling time precision. The millisecond-level sampling time precision indicates that the sampling unit collects at least two pieces of data within 1s. Higher sampling precision of the sampling unit indicates that the sampling parameter can more reflect a status change of an optical signal.

In a possible implementation, each time obtaining one sampling parameter, the sampling unit outputs the sampling parameter to the alarm information generation unit and the module central processing unit. In other words, a sampling interval of the sampling unit is the same as a sampling interval of the module central processing unit (which may also be understood as an interval for obtaining the sampling parameter from the sampling unit).

In another possible implementation, the sampling interval of the module central processing unit may be greater than the sampling interval of the sampling unit. For example, the sampling interval of the sampling unit is 10 ms, that is, one piece of data is collected every 10 ms, and the sampling interval of the module central processing unit is 20 ms, that is, a latest collected sampling parameter is obtained from the sampling unit every 20 ms. The alarm information generation unit is similar, and is not described herein again. Optionally, a sampling interval of the alarm information generation unit is less than or equal to the sampling interval of the module central processing unit.

S1002a: The alarm information generation unit performs exception detection.

For example, the alarm information generation unit receives the sampling parameters input by the sampling unit (for example, two sampling parameters can be received per second). The alarm information generation unit may configure an exception detection condition, and the alarm information generation unit determines, based on the exception detection condition, whether the received sampling parameter meets the exception detection condition. In this embodiment of this application, an example in which the exception detection condition is a preset threshold range is used for description. The preset threshold range is used to indicate whether an exception event occurs, or may be understood as being used to indicate whether the photo-generated current is abnormal.

Specifically, the alarm information generation unit may receive, in real time, a plurality of sampling parameters output by the sampling unit, compare the received sampling parameters with end values of the preset threshold range one by one, and generate alarm information when the sampling parameter is greater than a maximum value of the preset threshold range or is less than a minimum value of the preset threshold range.

In an example, if the alarm information generation unit detects that the sampling parameter exceeds (including being greater than or less than) the preset threshold range, that is, the exception detection condition is met, the alarm information is generated, and S1003 is performed.

In another example, if the alarm information generation unit detects that the sampling parameter does not exceed the preset threshold range, it may be determined that no exception occurs, that is, the exception detection condition is not met, and S1001, S1002a, and S1002b (the module central processing unit stores the sampling parameter) continue to be performed.

It should be noted that, in this embodiment of this application, an example in which the exception detection condition of the alarm information generation unit is set to the preset threshold range is merely used for description. In another embodiment, the exception detection condition may alternatively be another threshold, for example, may be a received optical signal amplitude threshold. This is not limited in this application.

S1002b: The module central processing unit stores the sampling parameter.

For example, the module central processing unit obtains configuration information in an initialization phase, specifically, reads the SampleDurations register to obtain the sampling interval. The module central processing unit reads, at the preset sampling interval, the sampling parameter obtained by the sampling unit through sampling. As described above, optionally, the sampling interval of the module central unit may be greater than or equal to the sampling interval of the sampling unit. This is not limited in this application.

For example, each time obtaining one sampling parameter, the module central processing unit stores the obtained sampling parameter into the sampling information storage unit.

In this embodiment of this application, sampling parameters in the sampling information storage unit are stored in a sampling time sequence. The sampling time sequence is time points at which data is obtained through sampling by the sampling unit, or may be understood as time points at which the module central processing unit reads the sampling parameters, or may be understood as time points at which the module central processing unit writes the sampling parameters into the sampling information storage unit. Certainly, there may be a specific error between the foregoing time points, but the time sequence corresponds. In this way, in this embodiment of this application, the sampling parameters are stored in the sampling time sequence, so that the sampling parameters in the sampling information storage unit are continuously stored based on the sampling time sequence. Correspondingly, when sampling information is subsequently sent, a storage sequence is the sampling time sequence, and processing efficiency of the module central processing unit in a data preparation phase can be improved. The effect is described in detail in S1008 in the following embodiment.

For example, the module central processing unit detects whether the sampling information storage unit is fully written currently. In an example, if the sampling information storage unit is not fully written currently, the currently obtained sampling parameter is written into a vacant location of the sampling information storage unit. In this embodiment of this application, for the module central processing unit, the sampling parameters are stored in sequence in the sampling information storage unit. For example, storage location identification information (for example, a page ID) of the sampling parameters maintained by the module central processing unit is consecutive, but storage addresses (which may be understood as physical storage addresses) of the sampling parameters in the sampling information storage unit may be discrete. This is not limited in this application.

In another example, if the sampling information storage unit is fully written currently, the module central processing unit may perform overwriting on the sampling information storage unit, that is, rewriting from a 1^{st} position of the sampling information storage unit. In other words, in this example, when the sampling information storage unit is fully written, the module central processing unit writes the obtained sampling parameter into a sampling parameter earliest stored (that is, a sampling time point is the smallest) in the sampling information storage unit. In this way, limited storage space is overwritten, so that real-time storage of the sampling parameter can be ensured, and the limited space can be effectively used, thereby avoiding storage space redundancy. In other words, in this embodiment of this application, storage space of a specified size (that is, the sampling information storage unit) is obtained through division from a memory to implement storage of the sampling parameter. Certainly, larger space indicates that more sampling parameters are stored. Correspondingly, in a subsequent fault analysis process, more sampling parameters are involved, and accuracy of fault analysis can be improved. A size of the storage space may be set based on an actual requirement. This is not limited in this application.

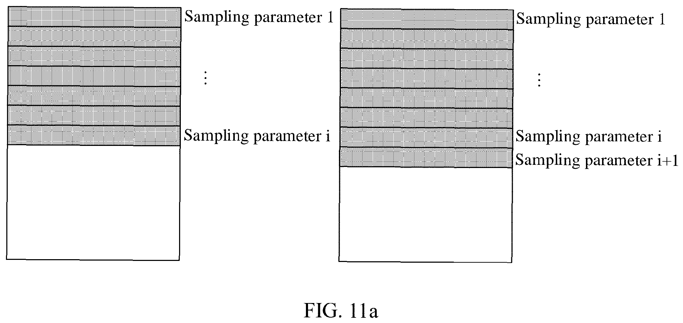

The following describes the foregoing storage manner in detail by using a specific example. FIG. 11a is a schematic diagram of an example of storage of sampling parameters. Refer to FIG. 11a. The module central processing module detects whether the sampling information storage unit is fully written currently. In this example, the sampling information storage unit is not fully written, and currently stored sampling parameters include a sampling parameter 1, ..., and a sampling parameter i. The module central processing unit detects that the sampling information storage unit is not fully written, and writes a sampling parameter i+1 into a vacant location in the sampling information storage unit. In addition, a storage location of the sampling parameter i+1 is adjacent to that of the sampling parameter i. Certainly, as described above, consecutiveness of the sampling parameters in storage locations is for the module central processing unit, and is not described again in the following.

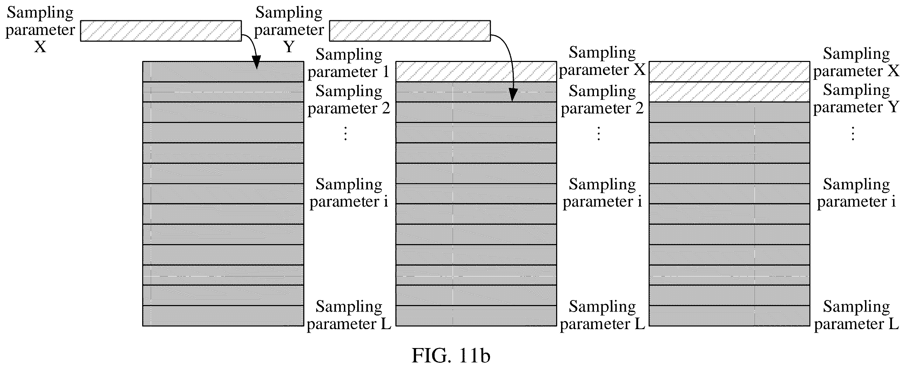

FIG. 11b is a schematic diagram of an example of storage of sampling parameters. Refer to FIG. 11b. In this example, the sampling information storage unit is fully written, and currently stored sampling parameters include a sampling parameter 1, ..., and a sampling parameter L. L is a maximum quantity of fast collection points configured in the TotalSampleNum register. The module central processing unit detects that the sampling information storage unit is fully written, and the module central processing unit writes a sampling parameter X into a location of a sampling parameter (that is, the sampling parameter 1) earliest stored in the sampling information storage unit, to overwrite the sampling parameter (that is, the sampling parameter 1). For example, the module central processing unit receives a sampling parameter Y, and detects that the sampling information storage unit is fully written, and the module central processing unit writes the sampling parameter X into a location of a sampling parameter (that is, the sampling parameter 2) earliest stored in the sampling information storage unit currently. In other words, the storage location of the sampling parameter Y and the storage location of the sampling parameter X are consecutive.

In a possible implementation, when storing the sampling parameter into the sampling information storage unit, the module central processing unit may correspondingly write a sampling time point (that is, a time point at which the module central processing unit obtains the sampling parameter) of the sampling parameter into the sampling information storage unit. In other words, sampling parameters in the sampling information storage unit may respectively correspond to sampling time points, and the sampling time points are used to indicate the sampling time sequence of the sampling parameters. In this example, the sampling parameters in the sampling information storage unit may be stored out-of-order, or may be stored in the sampling time sequence in FIG. 11a. A difference is that, if the sampling parameters in the sampling information storage unit are stored out of order, when performing sampling parameter overwriting, the module central processing unit traverses the sampling time points corresponding to the sampling parameters, finds a sampling parameter with a smallest sampling time point (that is, an earliest stored sampling parameter), and overwrites the sampling parameter. In this way, the sampling parameters are correspondingly stored based on the sampling time points, so that in a subsequent sending process, out-of-order of the sampling parameters caused during transmission can be avoided, and the network device side can restore a sequence of the received sampling parameters based on the sampling time points. In addition, when sending the sampling parameters to the network device side, the module central processing unit does not need to sort the sampling parameters, and may directly read sampling parameters of a specified length and send the sampling parameters to the network device, to reduce response duration and further reduce overall duration for fault locating.

For example, S1001, S1002a, and S1002b are continuous processes. To be specific, before a fault occurs, the modules repeatedly perform the foregoing steps based on the plurality of sampling parameters collected by the sampling unit.

For example, S1002a and S1002b are asynchronously performed, and an execution sequence of S1002a and S1002b is not limited in this application.

S1003: The alarm information generation unit sends the alarm information to the module central processing unit and the network device central processing unit.

For example, as described above, the alarm information generation unit performs exception detection on the received plurality of sampling parameters one by one, determines that an exception event occurs when detecting that the sampling parameter exceeds the preset threshold range or that a signal is lost, and generates the alarm information. The alarm information generation unit sends the alarm information to the module central processing unit through an interface, and the alarm information generation unit sends the alarm information to the network device central processing unit through a hardware alarm interface.

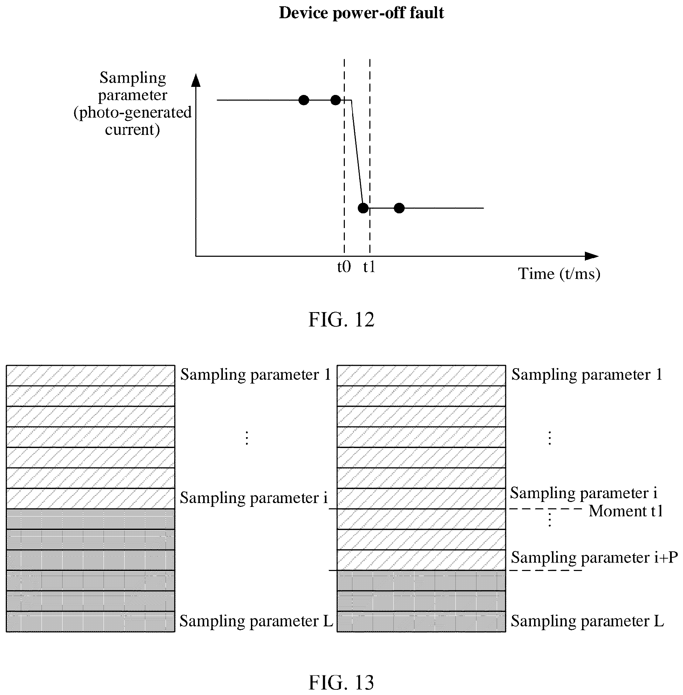

For example, in this embodiment, it is assumed that a device power-off fault occurs. For example, the device power-off fault occurs on the first network device in FIG. 2. Correspondingly, a device exception of the first network device causes the optical signal received by the optical module in the second network device to be abnormal. FIG. 12 is a schematic diagram of an example of a sampling parameter. Refer to FIG. 12. Before a moment t0, both a first network device and a second network device run normally. Correspondingly, an optical signal that is sent by the first network device and that is received by the second network device is normal, that is, a sampling parameter collected by a sampling unit in a second optical module remains at a stable value (which may slightly fluctuate and is ignored herein). For example, if the device power-off fault occurs on the first network device at the moment t0, an optical signal received by the second optical module in the second network device is abnormal. For example, a quantity of sampling parameters collected by the sampling unit in the second optical module drops starting from the moment t0 (for example, a moment t1). Correspondingly, the alarm information generation unit may detect, based on the obtained sampling parameter (for example, a sampling parameter at the moment t1), that the sampling parameter is less than a minimum value of a preset threshold range, determine that an exception event occurs, and generate and send alarm information.

It should be noted that, in this embodiment of this application, the device power-off fault event is merely used as an example for description. In another embodiment, the exception event may further include but is not limited to: an optical jumper fall-off fault event, an optical jumper bending fault event, an optical path quality deterioration fault event, and the like. This is not limited in this application.

In this embodiment of this application, the alarm information may be that a digital logic signal changes from a low level to a high level, or the alarm information may be that a digital logic signal changes from a high level to a low level. Certainly, the alarm information may also be information of another type. This is not limited herein.

For example, if the alarm information generation unit detects that the sampling parameter does not exceed the preset threshold range, the alarm information generation unit outputs the high level to the module central processing unit and the network device central processing unit. When the alarm information generation unit detects that the sampling parameter exceeds the preset threshold range, the alarm information generation unit outputs a signal from the high level to the low level (that is, the alarm information) to the module central processing unit and the network device central processing unit. When the alarm information generation unit detects that the sampling parameter is within the preset threshold range, an output signal changes from the low level to the high level.

In this embodiment of this application, the alarm information generation unit performs exception detection in real time. For example, the alarm information generation unit continuously outputs the high level to the module central processing unit and the network device central processing unit before detecting the exception, and continuously outputs the low level to the module central processing unit and the network device central processing unit after detecting the exception and before the exception is recovered.

For example, after receiving the alarm information, the network device central processing unit periodically detects whether the module central processing unit has prepared data. Specific descriptions are described in detail in the following.

S1004a: The module central processing unit obtains P sampling parameters.

For example, in the initialization phase, the module central processing unit detects that the SampleModeControl register indicates that the start/stop mode is the force mode (for the concept, refer to the foregoing description). Correspondingly, after receiving the alarm information sent by the alarm information generation unit, the module central processing unit continues to obtain the P sampling parameters from the sampling unit. A value of P is obtained by the module central processing unit in the initialization phase by reading the Post-SampleNum register. The value of P may be any value in a range of 1 to 65535, and may be set based on an actual requirement. This is not limited in this application. For example, the value of P is less than a value of L, that is, less than a maximum storage threshold of the sampling information storage unit.

S1004b: The module central processing unit stores the P sampling parameters.

For example, each time obtaining one sampling parameter, the module central processing unit stores the sampling parameter into the sampling information storage unit until the P sampling parameters are obtained and stored.

For example, FIG. 13 is a schematic diagram of an example of storage of sampling parameters. Refer to FIG. 13. It is assumed that L sampling parameters have been stored in the sampling information storage unit before a moment t1. A sampling parameter i is a latest stored sampling parameter. Correspondingly, an adjacent sampling parameter after the sampling parameter i is a sampling parameter with a smallest sampling time point currently in the sampling information storage unit. The module central processing unit continues to obtain P sampling parameters, and stores the P sampling parameters in the sampling information storage unit. The P sampling parameters are stored in sequence starting from a location after that of the sampling parameter i. A sampling parameter i+P is a sampling parameter with a largest sampling time point in the sampling information storage unit, and a next sampling parameter adjacent to the sampling parameter i+P is a sampling parameter with a smallest sampling time point. For the storage manner, refer to related descriptions in the foregoing embodiment. Details are not described herein again. In this way, in this embodiment of this application, after the alarm information is received, the P sampling parameters continue to be obtained. The P sampling parameters and the previously obtained sampling parameters (for example, the sampling parameters before the moment t1 that are stored in the sampling information storage unit in FIG. 13) are complete sampling sample data on a fault site. In this way, in a subsequent fault analysis process, the device can obtain the sampling parameters before and after the fault point, to obtain more analysis data, thereby improving accuracy of fault locating.

S1005: The module central processing unit indicates to the network device central processing unit that the data is ready.

For example, the module central processing unit stops obtaining a sampling parameter, and outputs indication information to the network device central processing unit, to indicate that the sampling parameter is ready.

Specifically, based on the configuration of the SampleModeControl register, in the force mode, after receiving the alarm information, and obtaining and storing the P sampling parameters, the module central processing unit sets the SampleReadyFlag register to 1, to indicate that the data is ready. In the initialization phase, the SampleReadyFlag register is set to 0, to indicate that the data is being prepared. It may be understood as that the module central processing unit indicates, to the network device central processing unit, that the data is ready by setting the SampleReadyFlag register.

The network device central processing unit receives the alarm information in the execution phase of S1003, and the network device central processing unit starts to periodically detect the status of the SampleReadyFlag register in response to the received alarm information.

In an example, if the network device central processing unit detects, at a moment for triggering a period, that the SampleReadyFlag register is set to 0, no processing is performed, and the network device central processing unit continues to wait for a next period.

In another example, if the network device central processing unit detects, at the moment for triggering the period, that the SampleReadyFlag register is set to 1, it is determined that the module central processing unit has prepared the data, and a subsequent step may be performed. For example, a smaller value of period duration during which the network device central processing unit polls the SampleReadyFlag register indicates that the network device central processing unit may detect a status update of the SampleReadyFlag register earlier, thereby reducing overall response duration. However, the smaller value may affect another processing task of the network device central processing unit. Therefore, the period duration may be set based on an actual requirement, for example, 10 ms. This is not limited in this application.

It should be noted that instruction interaction of the modules in this embodiment of this application may be understood as that a corresponding instruction is implemented by setting the status of the register. In the following embodiments, except individual interaction, details are not described again.

In a possible implementation, after the SampleReadyFlag register is set to 1, another process is not allowed to modify (including deletion and writing) the data in the sampling information storage unit.

S1006a: The network device central processing unit indicates the module central processing unit to prepare data.

For example, the network device central processing unit sends indication information to the module central processing unit. The indication information includes but is not limited to data type information and data length information. The indication information indicates the module central processing unit to start to prepare the data that needs to be uploaded (that is, to be sent to the network device central processing unit). The data type information indicates a type of the data that needs to be uploaded. The data length information indicates a length of the data to be uploaded.

In some specific instances, the network device central processing unit may set a value of the DumpID register. As described above, the value of the DumpID register indicates the data type information. For example, the data type information may include but is not limited to a log (log) type, a sampling information (that is, the sampling parameter) type, and the like. The network device central processing unit may indicate the module central processing unit to upload data of a specified type by setting the value of the register.

S1006b: The module central processing unit prepares the data.

For example, the module central processing unit starts to prepare the data in response to the indication in the network device central processing unit. In some specific examples, the module central processing unit may determine, by reading the value of the DumpID register, that the sampling parameter needs to be uploaded to the network device central processing unit.

In the data preparation phase, after determining that the sampling parameter needs to be uploaded, the module central processing unit searches the sampling information storage unit for a start location of the sampling parameter that needs to be sent. In this embodiment of this application, the module central processing unit groups N sampling parameters into a plurality of file blocks (which may also be referred to as data blocks) and sends the plurality of file blocks to the network device central processing unit. Correspondingly, the data preparation phase may also be understood as searching a start sampling parameter of a file block to be sent each time.

In this embodiment of this application, different storage manners correspond to different manners for searching the start sampling parameter.

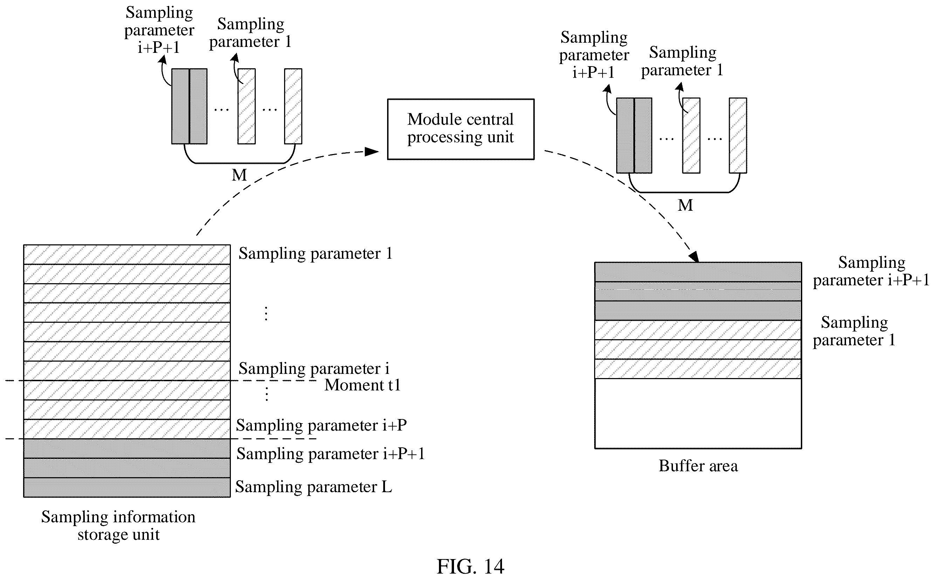

In a possible implementation, as described above, the sampling parameters in the sampling information storage unit are stored in the sampling time sequence. In an example, the module central processing unit sends the N sampling parameters to the network device central processing unit in the sampling time sequence of the sampling parameters in the sampling information storage unit. For example, a 1^{st} sampling parameter that is in a 1^{st} data packet and that is sent by the module central processing unit to the network device central processing unit is a sampling parameter with a smallest sampling time point in the sampling information storage unit, that is, an earliest stored sampling parameter in the sampling parameters currently stored in the sampling information storage unit. For example, FIG. 14 is a schematic diagram of an example of data transmission. Refer to FIG. 14. For example, a storage result in FIG. 13 is used as an example. The sampling information storage unit stores L sampling parameters, and a sampling parameter with a largest sampling time point, that is, a latest written sampling parameter is a sampling parameter i+P. As described above, when the sampling parameter is written, a sampling parameter with a smallest sampling time point before the sampling parameter is written is overwritten. Therefore, after the sampling parameter i+P is overwritten, a sampling parameter with a smallest sampling time point currently in the sampling information storage unit is a sampling parameter i+P+1 that is not overwritten. In this example, the module central processing unit sends the N sampling parameters to the network device central processing unit in the sampling time sequence starting from the sampling parameter with the smallest sampling time point, so that the network device central processing unit obtains the N sampling parameters that are sorted in the sampling time sequence, and the network device central device may directly perform fault analysis based on the N sampling parameters with no need to resort the sampling parameters, thereby shortening response duration of the network device and further reducing overall response duration for fault locating.

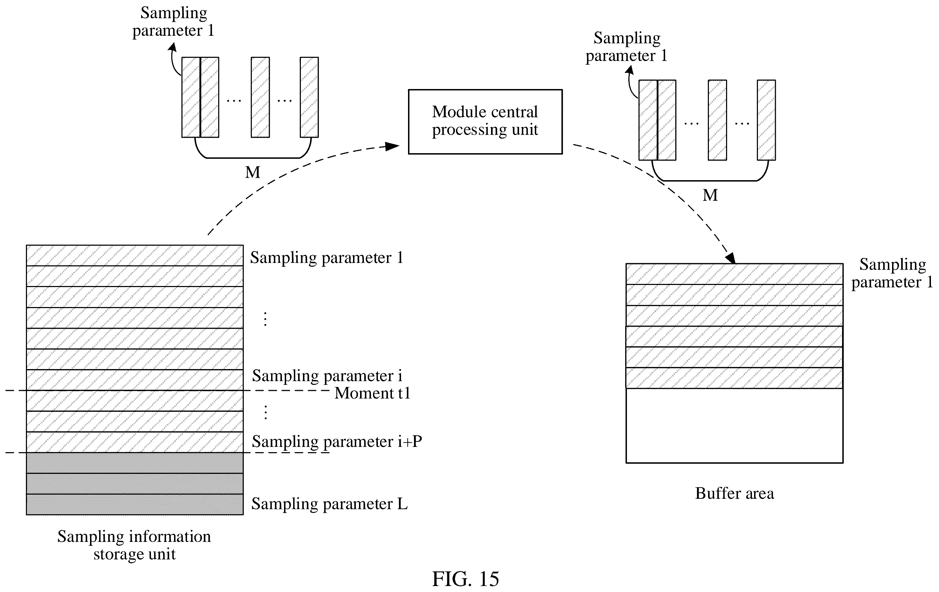

In another example, the module central processing unit sends the N sampling parameters based on storage locations in the sampling information storage unit. In this example, a 1^{st} sampling parameter that is in a 1^{st} data packet and that is sent by the module central processing unit to the network device central processing unit is a sampling parameter whose storage location is a 1^{st} position in the sampling information storage unit. For example, FIG. 15 is a schematic diagram of an example of data transmission. Refer to FIG. 15. For example, a storage result in FIG. 13 is used as an example. The module central processing unit determines that the sampling parameter 1 is a 1^{st} sampling parameter that is in a first data packet and that needs to be sent. In this way, the module central processing unit may determine, with no need to search the 1^{st} sampling parameter, that a sampling parameter at a 1^{st} storage location is the 1^{st} sampling parameter that needs to be sent, to shorten response duration of the module central processing unit, and further shorten overall response duration for fault locating.

In another possible implementation, as described above, the sampling parameters in the sampling information storage unit correspond to sampling time labels, and the labels identify obtaining time points of the sampling parameters. In this scenario, the sampling parameters in the sampling information storage unit may be stored in the sampling sequence. Correspondingly, in an example, if a 1^{st} sampling parameter that is in a 1^{st} data packet and that is sent by the module central processing unit is a sampling parameter with an earliest sampling time point, the module central processing unit may search a corresponding sampling parameter based on the sampling time label. In another example, a 1^{st} sampling parameter that is in a 1^{st} data packet and that is sent by the module central processing unit may be a sampling parameter at a 1^{st} storage location. For related descriptions, refer to the foregoing descriptions. Details are not described herein again.

Optionally, in the scenario in which the sampling parameter corresponds to the sampling time label, the sampling information storage unit may alternatively store the sampling parameters out-of-order. Correspondingly, in an example, if a 1^{st} sampling parameter that is in a 1^{st} data packet and that is sent by the module central processing unit is a sampling parameter with an earliest sampling time point, the module central processing unit may search a corresponding sampling parameter based on the sampling time label. In another example, a 1^{st} sampling parameter that is in a 1^{st} data packet and that is sent by the module central processing unit may be a sampling parameter at a 1^{st} storage location. For related descriptions, refer to the foregoing descriptions. Details are not described herein again. In this way, the sampling time label is set, so that the module central processing unit can quickly find a 1^{st} to-be-sent sampling parameter in each data packet, thereby shortening response duration on the module central processing unit side, and further shortening overall response duration for fault locating.

S1007: The network device central processing unit obtains a data length.

For example, the network device central processing unit obtains the data length from the module processing unit. The data length includes a total file length and a file block length (which may also be referred to as a data block length). The total file length is a total length of the N sampling parameters sent by the module central processing unit to the network device central processing unit. Optionally, the total file length may also be understood that a quantity of sampling parameters to be sent by the module central processing unit. The network device central processing unit may determine a corresponding data length based on the quantity of sampling parameters. Optionally, each sampling parameter may occupy two bytes, and may be set based on an actual requirement. This is not limited in this application. The block length is a length of a file block (or a data block) sent each time.

In some specific instances, as described above, the DumpLength register is configured to indicate the total file length (which may also be referred to as a total Dump file length, or an uploaded data total length, which is not limited in this application), that is, a total data length of the sampling parameters to be sent to the network device central processing unit. The DumpBufferLength register is configured to indicate the file block length, that is, a length of data sent each time. For related descriptions, refer to Table 1. Details are not described herein again.

In some specific instances, the network device central processing unit may indicate the module processing unit to read the DumpLength register and the DumpBufferLength register. The module processing unit reads the registers in response to the indication of the network device central processing unit, and sends an obtained total file length N and an obtained file block length M (that is, the dump file block length) to the network device central processing unit. As described above, data exchange between the module central processing unit and the network device central processing unit may also be completed through the register. For a detailed manner, refer to embodiments of the conventional technology. Details are not described one by one in this application, and are not described again in the following.

For example, the network device central processing unit may allocate adaptation storage space and evaluate a quantity of upload times (which may also be understood as a quantity of blocks of the N sampling parameters) based on the obtained data length (including the total file length and the file block length).

S1008: The network device central processing unit indicates the module central processing unit to send the sampling parameter.

For example, the network device central processing unit sends an upload instruction to the module central processing unit, to indicate the module central processing unit to start to send the sampling parameter.

In some specific examples, the network device central processing unit may indicate, by setting the UploadControl register, the module central processing unit to start to upload the sampling parameter. For example, the network device central processing unit sets the UploadControl register to 0x03, to indicate to start to upload.

The module central processing unit periodically detects the UploadControl register. When detecting that the UploadControl register is set to 0x03, the module central processing unit starts to perform an upload task, that is, S1009.

S1009: The module central processing unit reads M sampling parameters from the sampling information storage unit.

For example, in response to the upload instruction of the network device central processing unit, the module central processing unit reads sampling parameters of a specified data length (that is, the block length described above) from the sampling information storage unit based on the value (for example, M) recorded in the DumpBufferLength register. In this embodiment of this application, an example in which the module central processing unit reads the M sampling parameters is used for description.

It should be noted that, as described above, that the DumpBufferLength register indicates the data length may also be understood as that the DumpBufferLength register indicates a quantity of pieces of data. The data length and the quantity of pieces of data correspond. In this application, only an example in which the M sampling parameters correspond to M bytes (or 2M bytes) is used for description. The data length may be set based on an actual requirement. This is not limited in this application.

In this embodiment of this application, different storage manners of the sampling information storage unit correspond to different sampling parameter reading manners.

For example, as described above, storage manners of the sampling parameter in the sampling information storage unit mainly include: with the sampling time label and without the sampling time label. In a scenario with the sampling time label, the sampling parameters may be stored in the sampling time sequence, or may be stored out-of-order. In a scenario without the sampling time label, the sampling parameters are stored in the sampling time sequence.

Corresponding to different scenarios, data reading manners may include but are not limited to the following.
1. In a scenario in which the sampling time label is not carried and the sampling parameters are stored in the sampling time sequence

### a. The sampling parameters are sent in the sampling time sequence.

For example, as described above, in this scenario, the 1^{st} sampling parameter that is in the 1^{st} data packet and that is sent by the module central processing unit is the sampling parameter with the smallest sampling time point in the sampling information storage unit. The module central processing unit uses the sampling parameter as the 1^{st} sampling parameter, and reads the M sampling parameters in the sampling information storage unit in the sampling time sequence (also the storage sequence) and based on the data length declared by the DumpBufferLength register. In this example, sending in the sampling time sequence enables a receive end (that is, the network device central processing unit) to obtain a plurality of sampling parameters that have been sorted in the time sequence. The network device central processing unit does not need to perform sorting, and may directly perform fault analysis, to reduce processing load of the network device central processing unit and shorten response duration of the network device central processing unit.

For example, refer to FIG. 14. The module central processing unit finds that a 1^{st} to-be-sent sampling parameter is a sampling parameter i+P+1, and sequentially reads M sampling parameters. When the module central processing unit reads a sampling parameter L (that is, a last sampling parameter at storage locations), if a quantity of read sampling parameters is still less than M, a next sampling parameter that needs to be read is a sampling parameter 1, and the module central processing unit may continue to read sampling parameters in sequence until the M sampling parameters are read.

### b. The sampling parameters are sent in the storage location sequence.

For example, as described above, in this scenario, the 1^{st} sampling parameter in the 1^{st} data packet sent by the module central processing unit is a sampling parameter at a 1^{st} position in the sampling information storage unit. The module central processing unit uses the sampling parameter as the 1^{st} sampling parameter, and reads the M sampling parameters in the sampling information storage unit in the storage sequence and based on the data length declared by the DumpBufferLength register. In this way, the module device central processing unit does not need to perform operations such as searching and sorting, and the network device central processing unit performs a sampling time sorting operation (a specific manner is described in the following embodiments), thereby reducing processing load of the module central processing unit.

2. In a scenario in which the sampling time label is carried and the sampling parameters are stored in the sampling time sequence

### a. The sampling parameters are sent in the sampling time sequence.

For example, the sending manner is the same as that in the scenario 1, and details are not described herein again.

### b. The sampling parameters are sent in the storage location sequence.

For example, the sending manner is the same as that in the scenario 1, and details are not described herein again. In this scenario, the network device central processing unit may sort the sampling parameters in ascending order of sampling time points based on sampling time labels of the sampling parameters, to obtain sampling parameters with continuous sampling time points, to perform fault analysis based on the N sampling parameters with continuous sampling time points, to accurately perform fault locating. In this scenario, a fault tolerance rate of a system can be improved. If a problem such as out-of-order of the sampling parameters is caused in a transmission process, the network device central processing unit may quickly restore the sampling parameter sequence based on the time labels of the sampling parameters.

3. In a scenario in which the sampling time label is carried and the sampling parameters are stored out-of-order

### a. The sampling parameters are sent in the sampling time sequence.

For example, in this scenario, the module central processing unit may find, based on the sampling time label, the sampling parameter with the smallest sampling time point, use the sampling parameter as the 1^{st} to-be-sent sampling parameter, and read, in ascending order of sampling time points, the M sampling parameters declared by the DumpBufferLength register. In this way, in this embodiment of this application, corresponding sampling parameter searching and reading manners may be provided based on different storage requirements, to meet requirements of different storage devices in different scenarios.

### b. The sampling parameters are sent in the storage sequence.

For example, in this scenario, the 1^{st} sampling parameter in the 1^{st} data packet sent by the module central processing unit is a sampling parameter at a 1^{st} position in the sampling information storage unit. The module central processing unit uses the sampling parameter as the 1^{st} sampling parameter, and reads the M sampling parameters in the sampling information storage unit in the storage sequence and based on the data length declared by the DumpBufferLength register. In this way, the module device central processing unit does not need to perform operations such as searching and sorting, and the network device central processing unit performs a sampling time sorting operation (a specific manner is described in the following embodiments), thereby reducing processing load of the module central processing unit.

S1010: The module central processing unit outputs the M sampling parameters to the network central processing unit.

For example, the module central processing unit reads the M sampling parameters from the sampling information storage unit, and writes the M sampling parameters into a buffer area one by one in a reading sequence. The buffer area is a specified area in a memory of the optical module, and a space length of the buffer area is set according to an indication of the DumpBufferLength register. In this embodiment of this application, the sequence of reading the sampling parameters by the module central processing unit includes reading the sampling parameters in the sampling time sequence and reading the sampling parameters in the storage sequence. For example, refer to FIG. 14. In this example, the module central processing unit reads the M sampling parameters from the sampling information storage unit in the sampling time sequence by using the sampling parameter i+P+1 as the 1^{st} sampling parameter. The module central processing unit stores the M sampling parameters in the buffer area in the reading sequence. As shown in FIG. 14, the sampling parameters stored in the buffer area are sorted in the reading sequence. In this example, it may also be understood that the sampling parameters are sorted in the sampling time sequence. The sampling parameter i+P+1 that ranks first is the sampling parameter with the smallest sampling time point, and other sampling parameters are sorted in ascending order of sampling time points.

For another example, refer to FIG. 15. In this example, the module central processing unit reads the M sampling parameters from the sampling information storage unit in the storage sequence by using the sampling parameter 1 as the 1^{st} sampling parameter. The module central processing unit stores the M sampling parameters in the buffer area in the reading sequence. As shown in FIG. 15, the sampling parameters stored in the buffer area are sorted in the reading sequence. In this example, it may also be understood that the sampling parameters are sorted in the storage location sequence of the sampling information storage unit. The sampling parameter that ranks first is the 1^{st} sampling parameter read by the module central processing unit, that is, the sampling parameter 1.

For example, after saving the first data packet (that is, including the M sampling parameters) to the buffer area, the module central processing unit sets bit0 of the UploadStatus register to 1, to indicate that the sampling parameter has been uploaded to the buffer area. In the initialization phase, bit0 of the UploadStatus register is set to 0.

After performing S1007, the network device central processing unit side may periodically (a period length may be set based on an actual requirement, for example, 10 ms, and this is not limited in this application) detect whether the UploadStatus register is set to 1. When detecting that the UploadStatus register is set to 1, the network device central processing unit determines that uploading to the buffer area is completely. The network device central processing unit reads the M sampling parameters from the buffer area. For example, the network device central processing unit may store the read M sampling parameters into the buffer area of the network device central processing unit in the reading sequence.

S1011: The network device central processing unit determines whether the obtained sampling parameter reaches a threshold.

For example, as described above, in S1007, the network device central processing unit obtains the total file length N. Each time after receiving one data packet (that is, the M sampling parameters), the network device detects whether sampling parameters stored in the buffer area on the network device side reaches a data amount indicated by the total file length, that is, whether the N sampling parameters are obtained.

In an example, if the network device central processing unit detects that sampling parameters of a specified length (that is, the total file length declared by the DumpLength register) is not obtained, S1008 is repeatedly performed. In other words, the network device central processing unit indicates the module central processing unit to continue to send the sampling parameter. In some specific examples, the network device central processing unit may set a status of the UploadControl register. For example, the UploadControl register is set to 0x02, to indicate the module central processing unit to continue to upload the sampling parameter. The module central processing unit sends a second data packet, that is, a next file block, to the module central processing unit in response to the indication of the network device central processing unit, for example, detecting the status of the UploadControl register. A 1^{st} sampling parameter in the second data packet may be a sampling parameter with a smallest sampling time point currently stored in the sampling information storage unit, or may be a sampling parameter that is currently located at a 1^{st} position in the sampling information storage unit. In other words, in a scenario in which the data is sent in the sampling time sequence or the sampling parameter storage sequence, the 1^{st} sampling parameter of the second data packet sent by the module central processing unit is a sampling parameter that is continuous in terms of sampling time points with a last sampling parameter in the 1^{st} data packet, and is also consecutive in terms of storage locations. Certainly, if a last sampling parameter of a previous data packet (for example, the first data packet) is a sampling parameter located at a last storage location in the sampling information storage unit, a 1^{st} sampling parameter of a next data packet (for example, the second data packet) is a sampling parameter located at a 1^{st} storage location in the sampling information storage unit.

The module central processing unit may read the M sampling parameters in the sampling time sequence or the storage location sequence. For the specific reading manner, refer to the foregoing descriptions. Details are not described herein again. In this way, in this embodiment of this application, the N sampling parameters are groups into the plurality of file blocks for transmission in the dump file upload manner, to implement batch uploading of the sampling parameters, thereby reducing a quantity of interactions between the module and the network device, and shortening response duration consumed for interaction between the module and the network device. Therefore, the network device can obtain the N sampling parameters more quickly to perform fault analysis, further reduces overall duration consumed for fault analysis and improves a system performance indicator.

In another example, if the network device central processing unit detects that sampling parameters of a specified length (that is, the total file length declared by the DumpLength register) has been obtained, for example, the N sampling parameters have been obtained, S1012 and S1013 are performed.

In a possible implementation, that the module central processing unit detects that the sampling parameters of the total file length declared by the DumpLength register have been uploaded completely may be understood as that the module central processing unit has written the N sampling parameters into the buffer area, and the module central processing unit may set bit1 of the UploadStatus register to 1, to indicate that the file is uploaded completely. Correspondingly, the network device central processing unit detects that bit1 of the UploadStatus register is set to 1, and may determine that the N sampling parameters used for fault analysis have been obtained. Optionally, in this scenario, the network device central processing unit may synchronously determine receiving completeness of the N sampling parameters, that is, S1011. Optionally, in this scenario, the network device central processing unit may not perform S1011 and S1007, that is, the network device central processing unit may determine, based on the value of the UploadStatus register, whether the file (that is, the N sampling parameters) is completely received.

In another possible implementation, if the number (or the length) of sampling parameters in the sampling information storage unit is less than the total file length declared by the DumpLength register, the module central processing unit sends all sampling parameters in the sampling information storage unit to the network central processing unit. In other words, after the sampling parameters are buffered to the buffer area, the module central processing unit may set bit1 of the UploadStatus register to 1, to indicate that file has been uploaded. Correspondingly, the network device central processing unit detects that bit1 of the UploadStatus register is set to 1, and may determine that the sampling parameters used for fault analysis have been obtained. In this way, the scenario in which the sampling parameter in the sampling information storage unit is less than the total file length may be covered by setting the UploadStatus register, so that the network device central processing unit side can perform S1012 and S1013 in a timely manner, thereby avoiding long-time waiting, and further shortening response duration.

S1012: The network device central processing unit indicates the module central processing unit to stop sending.

For example, the network device central processing unit sends a stop instruction to the module central processing unit, to indicate the module central processing unit to stop sending the sampling parameter. This may also be understood as that the current fault locating procedure ends.

In some specific examples, the stop instruction includes data clearing information, and the information may include an identifier of the SampleReadyFlag register. The identifier indicates the module central processing unit to set the SampleReadyFlag register to 0. The module central processing unit responds to the received stop instruction and sets the SampleReadyFlag register to 0. In addition, the module central processing unit deletes remaining data in the sampling information storage unit. For example, in some possible implementations, a maximum amount of sampled data stored in the sampling information storage unit (that is, a total quantity of sampling points declared by TotalSampleNum) may be greater than the quantity of uploaded sampling parameters (that is, the file length indicated by the DumpLength register). Therefore, after the module central processing unit sends N pieces of data, the sampling information storage unit may have a remaining sampling parameter, that is, a sampling parameter that is not sent to the network device central processing unit. The module central processing unit deletes the remaining sampling parameter in the sampling information storage unit, to avoid reduction in accuracy of a fault analysis result because of, interference caused by the remaining sampling parameter to a sampling parameter in a next fault processing procedure.

In this embodiment of this application, a condition for the module central processing unit to resume sampling parameter reading, that is, to perform S 1001 again includes but is not limited to at least one of the following: alarm information is canceled, and the SampleReadyFlag register is set to 0.

In a possible implementation, the module central processing unit detects that the SampleReadyFlag register is set to 0, and the module central processing unit performs S1001 again. As described above, the SampleReadyFlag register is set to 0 in response to the stop instruction sent by the network device central processing unit. Correspondingly, it may be understood that the module central processing unit performs S1001 again, that is, a condition for re-reading the sampling parameter from the sampling unit is receiving the stop instruction sent by the network device central processing unit.

In another possible implementation, in a process of performing the procedure in FIG. 10, the sampling unit continuously performs sampling, and the alarm information generation unit obtains, in real time, a sampling parameter output by the sampling unit. For example, after receiving the alarm information, the module central processing unit stops obtaining the sampling parameter, and does not write new data into the sampling information storage unit. For example, as described above, the alarm generation unit may send the alarm information when the level of the hardware pin interface changes from the high level to the low level, or changes from the low level to the high level. In other words, when detecting that the parameter exception occurs (for example, exceeds the preset threshold range), the alarm generation unit continuously outputs the alarm information, for example, continuously outputs the high level. Optionally, at any moment when the procedure in FIG. 10 is executed, that is, before S1013 is executed, if the alarm generation unit detects that the sampling parameter returns to normal, for example, the sampling parameter falls back to the preset threshold range, the alarm generation unit stops sending the alarm information. For example, the level changes from the output high level to the output low level, to indicate that the sampling parameter returns to normal. The module central processing unit detects that the alarm information is canceled, that is, the received high level output by the alarm generation unit changes to the low level. The module central processing unit detects whether the stop instruction is received. If the stop instruction is not received, and execution duration does not expire (that is, S1007 starts to be performed, that is, duration from a time point at which the 1^{st} sampling parameter is sent to a current moment is less than preset duration), the module central processing unit continues to upload the file block to the network device central processing unit until the stop instruction is received, or the execution duration expires (that is, S1007 starts to be performed, duration from the time point at which the 1^{st} sampling parameter is sent to the current moment is greater than or equal to the preset duration).

Optionally, if the module central processing unit detects that the alarm information is canceled and the execution duration expires (which may be caused by an exception on the module or the network device side), the module central processing unit stops the currently performed step, clears the data, and sets the SampleReadyFlag register to 0. The module central processing unit performs S1001 and S 1002 again.

Optionally, if the module central processing unit receives the stop instruction sent by the network device central processing unit, and the alarm information still exists, the module central processing unit may not perform processing until the alarm information is canceled, and then clears the data and sets the SampleReadyFlag register to 0. The module central processing unit performs S1001 and S1002 again. In this way, because the alarm information is not canceled, it may be considered that the fault that occurs this time still exists. Correspondingly, if the module central processing unit performs S1001 again, a fault cause reflected by the obtained sampling parameter is the same as that of the previous, load of the modules is not reduced, and redundant interaction between the modules is not avoided. The module central processing unit may suspend the processing, wait for the alarm information to be canceled, which may also be understood as that the fault is cleared, and then perform S1001 and S1002 again.

S1013: The network device central processing unit performs fault locating.

For example, after detecting that sampling parameters of a specified length, for example, N sampling parameters, have been obtained, the network device central processing unit performs fault locating based on the N sampling parameters.

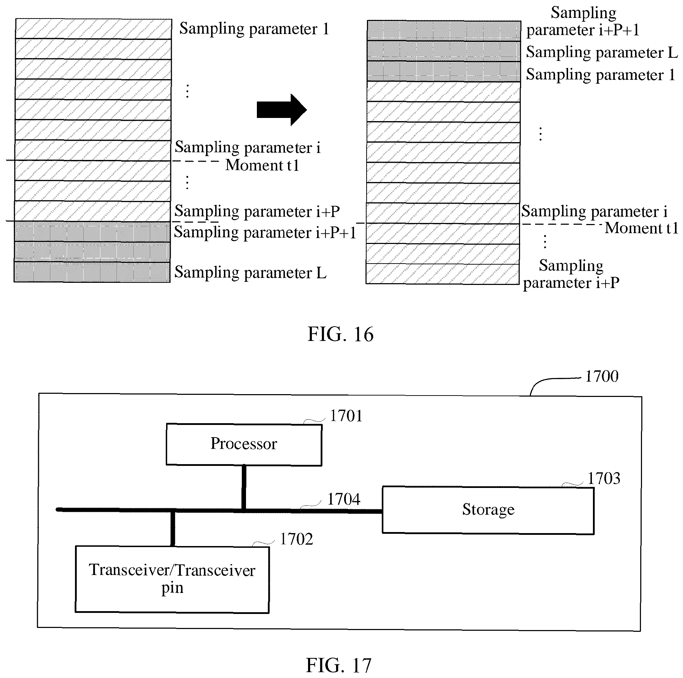

In a possible implementation, as described above, the module central processing unit optionally transmits the N sampling parameters in a storage sequence of the sampling parameters. In this scenario, after receiving the N sampling parameters, the network device central processing unit sorts the N sampling parameters in a sampling time sequence, to obtain the N sampling parameters with continuous sampling time points. Specifically, after receiving the N sampling parameters, the network device central processing unit may determine, based on a change status of the sampling parameter, a corresponding 1^{st} sampling parameter after a fault moment, and traverse P sampling parameters backwards starting from the sampling parameter. A traversed P^{th} sampling parameter is a sampling parameter with a largest sampling time point in the N sampling parameters sent by the module central processing unit. A 1^{st} sampling parameter received after the sampling parameter is a sampling parameter with a smallest sampling time point. The network device module may resort the N sampling parameters based on the sampling parameter with the smallest sampling time point and a sequence of received sampling parameters, to obtain the N sampling parameters with continuous sampling time points. For example, with reference to the transmission manner shown in FIG. 15, FIG. 16 is a schematic diagram of an example of sorting sampling parameters. Refer to FIG. 16. Based on the manner of transmitting the sampling parameters in the storage sequence shown in FIG. 15, the sequence of the N sampling parameters received by the network device central processing unit is the storage sequence in the sampling information storage unit. It may also be understood that a sequence of the N sampling parameters currently stored in the buffer area on the network device side is the same as the storage sequence of the N sampling parameters in the sampling information storage unit. As shown in FIG. 16, a start sampling parameter of the N sampling parameters stored in the buffer area of the network device is a sampling parameter 1, and a last sampling parameter is a sampling parameter L. For descriptions of other sampling parameters, refer to related descriptions in FIG. 15. Details are not described herein again. In this scenario, the network device central processing unit determines, based on a change status of each parameter, that a sampling parameter i+1 is the corresponding 1^{st} sampling parameter after the fault moment. In other words, a fluctuation between the sampling parameter and a previous sampling parameter is large. Correspondingly, a sampling parameter (that is, a sampling parameter i+P) that is separated from the sampling parameter i+1 by P sampling parameters is a last sampling parameter that is obtained by the module central processing unit in the current processing and that is with a largest sampling time point. The network device central processing unit may determine that a next sampling parameter (that is, a sampling parameter i+P+1) adjacent to the sampling parameter is a sampling parameter with a smallest sampling time point. The network device central processing unit uses the sampling parameter as a 1^{st} sampling parameter, and resorts the received sampling parameters. As shown in FIG. 16, the sampling parameter i+P+1 is a sampling parameter ranked first, and sampling parameters are sorted in descending order of sampling time points to the sampling parameter L. A sampling parameter that is ranked after the sampling parameter L is the sampling parameter 1, and sorting is performed backwards in sequence. A last sampling parameter is a sampling parameter i+P. In this way, the network device central processing unit may resort the N sampling parameters based on statuses and the obtaining sequence of the sampling parameters, to obtain the N sampling parameters with continuous time points. The network device central processing unit may perform fault analysis on the sampling parameters with continuous time points, to accurately locate the fault problem.

In another possible implementation, if the module central processing unit sends the sampling parameters in the sampling time sequence, the N sampling parameters obtained by the network device central processing unit are all sorted in ascending order of sampling time points, and the network device central processing unit does not need to sort the sampling parameters, thereby reducing processing load of the network device central processing unit and shortening response duration of the network device central processing unit.

It should be noted that an execution sequence of S1012 and S1013 is not limited in this embodiment of this application. Optionally, in a scenario in which the module central processing unit sends the sampling parameters in the sampling time sequence, the network device central processing unit may start to perform S1013 after receiving at least one sampling parameter.

Comparing is performed with the conventional technology. In the conventional technology, after receiving the alarm information, the network device central processing unit indicates the module central processing unit to output a sampling parameter obtained in a preset time window to the network device central processing unit. Generally, after the module central processing unit receives the related indication, specific command execution duration (that is, response duration) is required in the background. It is assumed that response duration from a time point at which the module central processing unit receives an upload command to a time point at which sampled data is copied to the buffer area is 40 ms (typical value<10 ms). For example, each sampling parameter includes two bytes, and 512 sampling parameters need to be uploaded. In the conventional technology, a processing period of the module central processing unit and the network device central processing unit is about 100 milliseconds, that is, uploading one sampling parameter every 100 milliseconds takes 51.2 seconds. In a scenario in which the technical solution in this embodiment of this application is used, in a manner of uploading the sampling parameters in batches, for example, the 512 sampling parameters need to be grouped into 10 file blocks for uploading, response duration is 10*40 milliseconds, that is, 400 milliseconds. Transmission of each byte takes about 0.09 ms. A time period for uploading historical parameters of the 512 sampling parameters is 1024*0.09 ms, that is, about 92 ms. File transmission takes about 492 ms totally. Response efficiency is improved by more than 100 times, and real-time performance of the fault alarm detection process is greatly improved. In addition, a quantity of interactions between the network device central processing unit and the module central processing unit is reduced, and long-term load of communication between the network device and the module is reduced.

In a possible implementation, the condition for the module central processing unit to perform S1004 may be further that a trigger signal sent by the network device central processing unit is received. A function of the trigger signal may be understood as similar to the function of the alarm information. After receiving the trigger signal, the module central processing unit performs S1004a to S1013. Optionally, the network device central processing unit may set a fault detection condition. For example, the fault detection condition may be period duration, or may be another condition in another embodiment. The fault detection condition may be set based on an actual requirement. This is not limited in this application. When detecting that the fault detection condition is met, the network device central processing unit sends the trigger signal to the module central processing unit to indicate to perform a subsequent fault locating procedure. In this scenario, the network device central processing unit may set fault detection conditions based on different scenario requirements, to trigger the module central processing unit to report fault data (that is, the sampling parameter) when there is a requirement, to perform fault locating based on the fault data, to meet different scenario requirements, and enrich application scenarios of this application.

FIG. 17 is a schematic block diagram of a data processing apparatus 1700 applied to fault locating according to an embodiment of this application. The apparatus 1700 may include a processor 1701 and a transceiver/transceiver pin 1702, and optionally, further include a storage 1703. The processor 1701 may be configured to perform steps performed by the optical module in the methods in the foregoing embodiments, control a receive pin to receive a signal, and control a transmit pin to send a signal.

All the components of the apparatus 1700 are coupled together through a bus 1704. In addition to a data bus, the bus system 1704 further includes a power bus, a control bus, and a status signal bus. However, for clear description, various buses in the figure are all denoted as the bus system 1704.

Optionally, the storage 1703 may be configured to store instructions in the foregoing method embodiments.

It should be understood that the apparatus 1700 according to this embodiment of this application may correspond to the optical module or the network device in the methods in the foregoing embodiments, and the foregoing and other management operations and/or functions of the components in the apparatus 1700 are separately used to implement corresponding steps of the foregoing methods. For brevity, details are not described herein again.

All related content of the steps in the foregoing method embodiments may be cited in function descriptions of the corresponding functional modules. Details are not described herein again.

Based on a same technical concept, an embodiment of this application further provides a computer-readable storage medium. The computer-readable storage medium stores a computer program, the computer program includes at least one segment of code, and the at least one segment of code may be executed by an apparatus, to control the apparatus to implement the foregoing method embodiments.

Based on a same technical concept, an embodiment of this application further provides a computer program. When the computer program is executed by an apparatus, the foregoing method embodiments are implemented.

A part or all of the program may be stored in a storage medium encapsulated with a processor, or a part or all of the program may be stored in a storage that is not encapsulated with a processor.

Based on a same technical concept, an embodiment of this application further provides a processor. The processor is configured to implement the foregoing method embodiments. The processor may be a chip.

The foregoing describes embodiments of this application with reference to the accompanying drawings. However, this application is not limited to the foregoing specific implementations. The foregoing specific implementations are merely examples, but are not limitative. Inspired by this application, a person of ordinary skill in the art may further make modifications without departing from the purposes of this application and the protection scope of the claims, and all the modifications shall fall within the protection of this application.

## Claims

1. A data processing method applied to fault locating, wherein the method is applied to an optical module, the optical module comprises a module central processing unit, a sampling unit, and a sampling information storage unit, the module central processing unit is separately coupled to the sampling unit and the sampling information storage unit, and the method comprises:
obtaining, by the module central processing unit, sampling parameters input by the sampling unit, wherein the sampling parameter is obtained by the sampling unit through sampling based on a received optical signal;
storing, by the module central processing unit, the sampling parameters into the sampling information storage unit; and
sending, by the module central processing unit, N sampling parameters in the sampling information storage unit to a network device central processing unit in response to indication information input by the network device central processing unit, wherein the N sampling parameters are grouped into a plurality of data blocks for transmission, so that the network device central processing unit or a network management device performs fault analysis based on the N sampling parameters, the N sampling parameters of the network management device are sent by the network device central processing unit, and N is an integer greater than 1.

2. The method according to claim 1, wherein the optical module further comprises an alarm information generation unit coupled to the module central processing unit, and the indication information is sent by the network device central processing unit after the network device central processing unit identifies alarm information; and before the sending, by the module central processing unit, N sampling parameters in the sampling information storage unit to a network device central processing unit in response to indication information input by the network device central processing unit, the method comprises:
receiving, by the module central processing unit, the alarm information input by the alarm information generation unit; and
after receiving the alarm information, continuing to obtain, by the module central processing unit, P sampling parameters input by the sampling unit, and storing the P sampling parameters into the sampling information storage unit, wherein P is an integer greater than 0 and less than N.

3. The method according to claim 2, wherein the sending, by the module central processing unit, N sampling parameters in the sampling information storage unit to a network device central processing unit in response to indication information input by the network device central processing unit comprises:
sending, by the module central processing unit in response to the indication information, the N sampling parameters to the network device central processing unit in a sampling time sequence of the N sampling parameters, wherein the sampling time sequence corresponds to a sequence in which the module central processing unit obtains sampling parameters from the sampling unit.

4. The method according to claim 3, wherein the optical module further comprises a buffer unit, and the sending, by the module central processing unit in response to the indication information, the N sampling parameters to the network device central processing unit in a sampling time sequence of the N sampling parameters comprises:
receiving, by the module central processing unit, first indication information input by the network device central processing unit, and obtaining M1 sampling parameters from the sampling information storage unit based on the sampling time sequence of the sampling parameters in the sampling information storage unit, wherein the M1 sampling parameters are a preset transmission length;
storing, by the module central processing unit, the M1 sampling parameters into the buffer unit in a sampling time sequence, and indicating the network device central processing unit to read the M1 sampling parameters from the buffer unit;
obtaining, by the module central processing unit in response to second indication information input by the network device central processing unit, M2 sampling parameters from the sampling information storage unit based on the sampling time sequence of the sampling parameters in the sampling information storage unit, wherein the M2 sampling parameters are the preset transmission length; and
storing, by the module central processing unit, the M2 sampling parameters into the buffer unit in a sampling time sequence, and indicating the network device central processing unit to read the M2 sampling parameters from the buffer unit.

5. The method according to claim 2, wherein the sending, by the module central processing unit, N sampling parameters in the sampling information storage unit to a network device central processing unit in response to indication information input by the network device central processing unit comprises:
sending, by the module central processing unit in response to the indication information, the N sampling parameters to the network device central processing unit in a storage sequence of the N sampling parameters in the sampling information storage unit.

6. The method according to claim 3 or 5, wherein the sampling parameters in the sampling information storage unit are stored in the sampling time sequence.

7. The method according to claim 3 or 5, wherein the N sampling parameters respectively correspond to sampling identifiers, and the sampling identifiers indicate the sampling time sequence of the sampling parameters.

8. The method according to any one of claims 1 to 7, wherein the storing, by the module central processing unit, the sampling parameters into the sampling information storage unit comprises:
when the sampling information storage unit is not fully written, storing, by the module central processing unit, the sampling parameter into a vacant location of the sampling information storage unit; or
when the sampling information storage unit is fully written, overwriting, by the module central processing unit, a sampling parameter earliest stored in the sampling information storage unit with the sampling parameter.

9. The method according to any one of claims 1 to 8, wherein
the module central processing unit obtains, based on a preset sampling interval, the sampling parameters input by the sampling unit, wherein the preset sampling interval is at a millisecond level; and
the sampling information storage unit is a millisecond-level storage medium, and the sampling information storage unit is located in a memory of the optical module.

10. An optical module, comprising: a module central processing unit, a sampling unit, and a sampling information storage unit, wherein the module central processing unit is separately coupled to the sampling unit and the sampling information storage unit;
the sampling unit is configured to: perform sampling based on a received optical signal to obtain sampling parameters, and output the sampling parameters to the module central processing unit;
the module central processing unit is configured to: receive the sampling parameters, and store the sampling parameters into the sampling information storage unit; and
the module central processing unit is further configured to send N sampling parameters in the sampling information storage unit to a network device central processing unit in response to indication information input by the network device central processing unit, wherein the N sampling parameters are grouped into a plurality of data blocks for transmission, so that the network device central processing unit or a network management device performs fault analysis based on the N sampling parameters, the N sampling parameters of the network management device are sent by the network device central processing unit, and N is an integer greater than 1.

11. The optical module according to claim 10, wherein the optical module further comprises an alarm information generation unit coupled to the module central processing unit;
the sampling unit is further configured to output the sampling parameter to the alarm information generation unit;
the alarm information generation unit is configured to: generate alarm information when the sampling parameter meets a preset alarm condition, and output the alarm information to the module central processing unit and the network device central processing unit, wherein the indication information is sent by the network device central processing unit after the network device central processing unit identifies the alarm information; and
the module central processing unit is further configured to: after receiving the alarm information, continue to obtain P sampling parameters input by the sampling unit, and store the P sampling parameters into the sampling information storage unit, wherein P is an integer greater than 0 and less than N.

12. The optical module according to claim 11, wherein the module central processing unit is specifically configured to:
send, in response to the indication information, the N sampling parameters to the network device central processing unit in a sampling time sequence of the N sampling parameters, wherein the sampling time sequence corresponds to a sequence in which the module central processing unit obtains sampling parameters from the sampling unit.

13. The optical module according to claim 12, wherein the optical module further comprises a buffer unit, and the module central processing unit is specifically configured to:
receive first indication information input by the network device central processing unit, and obtain M1 sampling parameters from the sampling information storage unit based on the sampling time sequence of the sampling parameters in the sampling information storage unit, wherein the M1 sampling parameters are a preset transmission length;
store the M1 sampling parameters into the buffer unit in a sampling time sequence, and indicate the network device central processing unit to read the M1 sampling parameters from the buffer unit;
obtain, in response to second indication information input by the network device central processing unit, M2 sampling parameters from the sampling information storage unit based on the sampling time sequence of the sampling parameters in the sampling information storage unit, wherein the M2 sampling parameters are the preset transmission length; and
store the M2 sampling parameters into the buffer unit in a sampling time sequence, and indicate the network device central processing unit to read the M2 sampling parameters from the buffer unit.

14. The optical module according to claim 11, wherein the module central processing unit is specifically configured to:
send, in response to the indication information, the N sampling parameters to the network device central processing unit in a storage sequence of the N sampling parameters in the sampling information storage unit.

15. The optical module according to any one of claims 10 to 14, wherein the module central processing unit is specifically configured to:
when the sampling information storage unit is not fully written, store the sampling parameter into a vacant location of the sampling information storage unit; or
when the sampling information storage unit is fully written, overwrite a sampling parameter earliest stored in the sampling information storage unit with the sampling parameter.

16. The optical module according to any one of claims 10 to 15, wherein
the module central processing unit obtains, based on a preset sampling interval, the sampling parameters input by the sampling unit, wherein the preset sampling interval is at a millisecond level; and
the sampling information storage unit is a millisecond-level storage medium, and the sampling information storage unit is located in a memory of the optical module.

17. A network device, comprising a network device central processing unit and the optical module according to any one of claims 10 to 16, wherein the network device central processing unit is coupled to the optical module;
the network device central processing unit is configured to send indication information to the optical module, to indicate the optical module to feed back a sampling parameter;
the optical module is configured to send N sampling parameters in a sampling information storage unit to the network device central processing unit in response to the indication information, wherein the N sampling parameters are grouped into a plurality of data blocks for transmission; and
the network device central processing unit is configured to: perform fault analysis based on the N sampling parameters, or send the N sampling parameters to a network management device, so that the network management device performs fault analysis based on the N sampling parameters.

18. A communication system, comprising the network device according to claim 17 and a power supply line; and
the power supply line is configured to supply power to the network device.

19. The communication system according to claim 18, wherein the system further comprises a network management device; and
the network management device is configured to: receive N sampling parameters sent by the network device, and perform fault analysis based on the N sampling parameters.
